# EUROPEAN PATENT APPLICATION

(11) **EP 4 492 713 A1**
(43) Date of publication of application: **15.01.2025**
(21) Application number: 23211866.1
(22) Date of filing: 23.11.2023
(51) Int. Cl.: H04L 1/00

(54) **APPARATUS, SYSTEM, AND METHOD OF COMMUNICATING UNEQUAL MODULATION AND CODING SCHEME (MCS) (UEM) INFORMATION**

(30) Priority: 13.07.2023 US 202318352100
(71) Applicant: INTEL Corporation, Santa Clara, CA 95054 (US)
(72) Inventor: SONG, Hao, Santa Clara, 95054 (US); HUANG, Po-Kai, San Jose, 95131 (US); LI, Qinghua, San Ramon, 94583 (US); STACEY, Robert, Portland, 97210 (US); VITURI, Shlomi, 6732925 Tel Aviv (IL)
(74) Representative: Rummler, Felix

(57) **Abstract**

For example, an Access Point (AP) may be configured to set Resource Unit (RU) allocation information for a user station (STA) in a user information (info) field for the user STA, the RU allocation information for the user STA configured to indicate an RU allocation for a Trigger-Based (TB) Uplink (UL) transmission from the user STA; to determine Unequal Modulation and Coding Scheme (MCS) (UEM) information for the user STA, the UEM information for the user STA configured to indicate an assignment of a plurality of MCSs to a plurality of UL resources in the RU allocation for the user STA, respectively, wherein the plurality of UL resources includes at least one of a plurality of frequency sub-channels or a plurality of spatial streams; and to transmit a trigger frame including the user info field for the user STA, and the UEM information for the user STA.

## Description

### TECHNICAL FIELD

Aspects described herein generally relate to communicating Unequal Modulation and Coding Scheme (MCS) (UEM) information.

### BACKGROUND

Devices in a wireless communication system may be configured to communicate according to communication protocols, which may utilize a Modulation and Coding Scheme (MCS).

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a user information (info) list field, in accordance with some demonstrative aspects.
Fig. 3 is a schematic illustration of an Extremely High Throughput (EHT) variant user info field format, which may be implemented in accordance with some demonstrative aspects.
Fig. 4 is a schematic illustration of a user info list field, in accordance with some demonstrative aspects.
Fig. 5 is a schematic illustration of an Unequal Modulation and Coding Scheme (MCS) (UEM) signaling format, in accordance with some demonstrative aspects.
Fig. 6 is a schematic illustration of a UEM signaling format, in accordance with some demonstrative aspects.
Fig. 7 is a schematic illustration of a signaling of a UEM field position, in accordance with some demonstrative aspects.
Fig. 8 is a schematic flow-chart illustration of a method of communicating UEM information, in accordance with some demonstrative aspects.
Fig. 9 is a schematic flow-chart illustration of a method of communicating UEM information, in accordance with some demonstrative aspects.
Fig. 10 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (LTE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology Telecommunications and Information Exchange between Systems Local and Metropolitan Area Networks-Specific Requirements; Part 11: Wireless LAN Medium Access Control (MAC) and Physical Layer (PHY) Specifications, December, 2020);* and/or IEEE 802.11be (*IEEE P802.11be*/*D3.1 Draft Standard for Information technology- Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), March 2023*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared. Dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

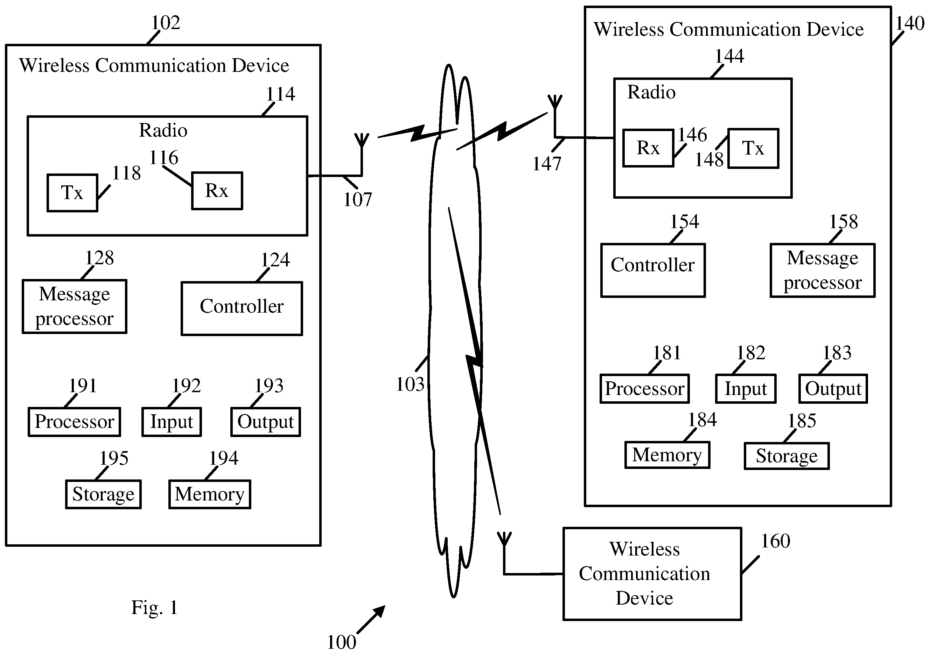

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include on or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a WiFi 8 STA.

In other aspects, for example, devices 102, 140 and/or 160 may be configured to perform one or more operations, and/or functionalities of an Ultra High Reliability (UHR) STA.

In other aspects, for example, devices 102, 140, and/or 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a WiFi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102, 140, and/or 160 may be configured to communicate in an HT network, an HE network, an EHT network, a UHR network, and/or any other network.

In some demonstrative aspects, devices 102, 140 and/or 160 may be configured to operate in accordance with one or more Specifications, for example, including one or more *IEEE 802.11 Specifications,* e.g., an *IEEE 802.11-2020 Specification, an IEEE 802.11ax Specification,* and/or any other specification and/or protocol.

In some demonstrative aspects, device 102 may include, operate as, perform a role of, and/or perform the functionality of, an AP STA.

In some demonstrative aspects, device 140, and/or device 160 may include, operate as, perform a role of, and/or perform the functionality of, one or more non-AP STAs. For example, device 140 may include, operate as, perform a role of, and/or perform the functionality of, at least one non-AP STA, and/or device 160 may include, operate as, perform a role of, and/or perform the functionality of, at least one non-AP STA.

In some demonstrative aspects, device 102, device 140, and/or device 160 may be configured to communicate according to a resource allocation mechanism, which may assign a Resource Unit (RU) or a multiple Resource Unit (MRU) to a user (also referred to as "user STA"), e.g., as described below.

In some demonstrative aspects, device 102, device 140, and/or device 160 may be configured to communicate according to a resource allocation mechanism, which may support assignment of an RU/MRU to a user utilizing the same, e.g., equal, modulation and coding scheme (MCS), e.g., as described below.

In some demonstrative aspects, device 102, device 140, and/or device 160 may be configured to communicate according to a resource allocation mechanism, which may support assignment of an RU/MRU to a user utilizing a plurality of different, e.g., unequal, MCSs, e.g., as described below.

In some demonstrative aspects, for example, in some implementations, scenarios, use cases, and/or deployments, there may be one or more technical issues in implementations, which assign an RU or an MRU to a user utilizing the same MCS, e.g., across the entire RU/MRU assigned to the user.

For example, utilizing the same MCS for the entire RU/MRU assigned to the user may result in low throughput, for example, when the RU assigned to the user is across a primary channel and one or more secondary channels.

For example, an RU/MRU assigned to a user may be subject to different Signal-to-Noise Ratio (SNR) conditions with respect to different frequencies, for example, due to interference and/or varying sensitivities with respect to primary and secondary channels.

For example, utilizing the same MCS for the entire assigned RU/MRU may result in low throughput, for example, as a primary channel and a secondary channel may adopt different clear channel assessment (CCA) methods, signal detect CCA and/or energy detect CCA, which may have different sensitivities with respect to the different channels. For example, on a 20MHz primary channel and a 20MHz secondary channel, the sensitivity thresholds may be -82 decibel-milliwatts (dBm) (signal detect CCA) and/or -62 dBm (energy detect CCA), respectively. For example, adopting different CCA methods for primary and secondary channels may result in significant signal-to-noise ratio (SNR) imbalance between the primary and secondary channels.

In some demonstrative aspects, device 102, device 140, and/or device 160 may be configured to implement an MCS allocation scheme (also referred to as an "unequal MCS (UEM) allocation scheme"), which may be configured to assign a plurality of MCSs, e.g., including two or more different MCSs, to a plurality of wireless resources, e.g., a plurality of different segments, in an RU/MRU allocation to a user, e.g., as described below.

In some demonstrative aspects, the unequal MCS allocation scheme may be configured to provide a technical solution to support assignment of different MCSs to a plurality of different wireless resources e.g., frequency segments of an RU/MRU, for example, when these wireless resources have considerable variations on SNR, for example, in order to fit to their SNR conditions and/or to achieve high throughput, e.g., as described below.

In some demonstrative aspects, the unequal MCS allocation scheme may be configured to provide a technical solution to support boosting a throughput of Wi-Fi systems.

In some demonstrative aspects, the unequal MCS allocation scheme may be configured to provide a technical solution to support increased throughput, for example, in cases when wireless resources, e.g., spatial streams and/or frequency sub-channels, are subject to different, e.g., notably different, wireless environments and/or conditions, e.g., varying SNR conditions.

In some demonstrative aspects, the unequal MCS allocation scheme may be configured to provide a technical solution to support allocation of unequal MCS over spatial streams, e.g., as described below.

For example, the unequal MCS over spatial streams may be configured to provide a technical solution to support Multiple-Input-Multiple-Output (MIMO), for example, where MIMO gains are different on different spatial streams, thereby causing various SNR conditions.

For example, when MIMO technologies are applied, a plurality of spatial streams may be realized to enhance throughput, for example, when a plurality of data streams may be transmitted simultaneously on the same wireless channels.

For example, MIMO gains may vary on different spatial streams, which may cause varying SNR conditions. According to this example, the unequal MCS over spatial streams may be configured to provide a technical solution to adaptively assign different MCSs to different spatial streams, e.g., to adapt to different SNRs.

In some demonstrative aspects, the unequal MCS allocation scheme may be configured to provide a technical solution to support assignment of unequal MCS over a plurality of frequency sub-channels, e.g., as described below.

In some demonstrative aspects, the unequal MCS allocation scheme may be configured to provide a technical solution to support assignment of unequal MCS over a plurality of spatial streams, e.g., as described below.

In some demonstrative aspects, the unequal MCS allocation scheme may be configured to provide a technical solution to support assignment of unequal MCS over both a plurality of frequency sub-channels and a plurality of spatial streams, e.g., as described below.

In some demonstrative aspects, the unequal MCS allocation scheme may be configured to support unequal MCS over a plurality of frequency channels, over a plurality of spatial streams, and/or over both frequency sub-channels and spatial streams, for example, in Uplink (UL) transmissions, e.g., as described below.

In some demonstrative aspects, there may be a need to provide a technical solution to support signaling of the unequal MCS assignment for UL resources. For example, some trigger frame formats and/or fields, e.g., a trigger frame format in accordance with an *IEEE 802.11be Specification,* may only support an assignment of a single MCS to each user, for example, such that only a single MCS may be used by a user to conduct Trigger Based (TB) LTL transmissions.

In some demonstrative aspects, device 102, device 140, and/or device 160 may be configured to implement an unequal MCS allocation scheme, which may be configured to provide a technical solution to support signaling of an unequal MCS assignment over a plurality of frequency sub-channels and/or spatial streams, for example, in TB UL transmissions, e.g., as described below.

In some demonstrative aspects, the unequal MCS signaling mechanism may be configured to implement a technical solution configured to support signaling of an unequal MCS assignment over a plurality of frequency sub-channels and/or over a plurality of both frequency sub-channels and spatial streams in TB UL transmissions, for example, in compliance with an *IEEE 802.11be Specification,* e.g., as described below.

In some demonstrative aspects, the unequal MCS signaling mechanism may utilize one or more user information (info) fields in a trigger frame, e.g., according to a new user-specific field format, which may be configured to enable unequal MCSs over a plurality of frequency sub-channels and/or spatial streams, for example, in TB UL transmissions, e.g., as described below.

In some demonstrative aspects, the unequal MCS signaling mechanism may utilize one or more user information (info) fields in a trigger frame to assign a plurality of MCSs, e.g., different MCSs, to a plurality of UL resources, e.g., different UL resources, in an RU/MRU, e.g., as described below.

In some demonstrative aspects, the unequal MCS signaling mechanism may utilize one or more user information (info) fields in a trigger frame to assign a plurality of MCSs, e.g., different MCSs, to a plurality of frequency sub-channels, e.g., different frequency sub-channels, in an RU/MRU, e.g., as described below.

In some demonstrative aspects, the unequal MCS signaling mechanism may utilize one or more user info fields in a trigger frame to assign a plurality of MCSs, e.g., different MCSs, to a plurality of spatial streams, e.g., different spatial streams, for example, in case MIMO is applied, e.g., as described below.

In some demonstrative aspects, the unequal MCS signaling mechanism may utilize one or more user info fields in a trigger frame to assign a plurality of MCSs to both frequency sub-channels and spatial streams, e.g., as described below.

In some demonstrative aspects, the unequal MCS signaling mechanism may utilize one or more trigger frames, which may be configured according to a trigger frame format, e.g., a new trigger frame format, which may be configured to apply, e.g., adaptively apply, unequal MCSs to a plurality of UL resources, for example, including frequency sub-channels, e.g., different frequency sub-channels, and/or spatial streams, e.g., as described below.

In some demonstrative aspects, the unequal MCS signaling mechanism may a trigger frame format, which may be configured to signal unequal MCSs to be applied to a plurality of UL resources, e.g., frequency sub-channels and/or spatial streams, within varying wireless environments, for example, in trigger based PPDU LTL transmissions, e.g., as described below.

In some demonstrative aspects, the unequal MCS signaling mechanism may utilize one or more user info fields of trigger frames, which may be configured to notify a user whether the user is an unequal MCS user or a non-unequal MCS user, e.g., as described below.

In some demonstrative aspects, the unequal MCS signaling mechanism may utilize one or more user info fields of trigger frames, which may be configured to provide to the user information regarding UEM fields for the user, e.g., as described below.

For example, the unequal MCS signaling mechanism may utilize UEM fields, which may be configured to carry, e.g., only carry, unequal MCSs information.

In some demonstrative aspects, the unequal MCS signaling mechanism may utilize a predefined field, e.g., an EHT-MCS 14 subfield, in a user info field, for example, to signal and/or indicate to a user that the user is an unequal MCS user, e.g., as described below.

For example, both user info fields and UEM fields may be identified by a user identification (AID12), for example, to preserve a user info field format, e.g., for excellent compatibility with an *IEEE 802. 11be Specification.*

In some demonstrative aspects, the unequal MCS signaling mechanism may utilize one or more subfields in a user info field, which may be configured to simplify, e.g., effectively simplify, a format of UEM fields, e.g., as described below.

For example, the format of the UEM fields may be simplified to provide a technical solution avoiding the insertion of an AID12 in each UEM field, thus contributing to resource (bits) saving and/or low overhead, e.g., as described below.

In some demonstrative aspects, the unequal MCS signaling mechanism may utilize one or more MCS type subfields configured to indicate MCS types of users, e.g., as described below.

In some demonstrative aspects, the unequal MCS signaling mechanism may utilize one or more UEM field indicator subfields, which may be configured to provide locations of LTEM fields, e.g., as described below.

In some demonstrative aspects, the unequal MCS signaling mechanism may be configured to provide a technical solution to enable the use of unequal MCSs over a plurality of frequency sub-channels and/or spatial streams in TB PPDU UL transmissions in Wi-Fi systems.

For example, the unequal MCS signaling mechanism may be configured to provide a technical solution to enable selection, e.g., adaptive selection, of MCSs, for example, to meet varying wireless environments of different frequency sub-channels and/or spatial streams, e.g., thus providing a higher throughput.

In some demonstrative aspects, controller 124 may be configured to control, trigger, cause, and/or instruct an AP implemented by device 102 to set RU allocation information for a user (also referred to as "user STA") in a user information (info) field for the user STA, e.g., as described below.

In some demonstrative aspects, the user may include a user (also referred "unequal MCS user" or "UEM user"), which is capable of supporting unequal MCS assignments, as described below.

In some demonstrative aspects, the RU allocation information for the user STA may be configured to indicate an RU allocation for a TB UL transmission from the user STA, e.g., as described below.

In some demonstrative aspects, controller 124 may be configured to control, trigger, cause, and/or instruct the AP implemented by device 102 to determine UEM information for the user STA, e.g., as described below.

In some demonstrative aspects, the UEM information for the user STA may be configured to indicate an assignment of a plurality of MCSs to a plurality of UL resources in the RU allocation for the user STA, respectively, e.g., as described below.

In some demonstrative aspects, the plurality of UL resources in the RU allocation for the user STA may include a plurality of frequency sub-channels in the RU allocation for the user STA, e.g., as described below.

In some demonstrative aspects, the plurality of UL resources in the RU allocation for the user STA may include a plurality of spatial streams in the RU allocation for the user STA, e.g., as described below.

In some demonstrative aspects, the plurality of LTL resources may include a plurality of frequency sub-channels and a plurality of spatial streams, e.g., as described below.

In some demonstrative aspects, controller 124 may be configured to control, trigger, cause, and/or instruct the AP implemented by device 102 to transmit a trigger frame including the user info field for the user STA, and the UEM information for the user STA, e.g., as described below.

In some demonstrative aspects, the trigger frame may include an EHT trigger frame, e.g., as described below.

In some demonstrative aspects, the trigger frame may include an UHR trigger frame, e.g., as described below.

In other aspects, the trigger frame may include any other type of frame.

In some demonstrative aspects, controller 124 may be configured to control, trigger, cause, and/or instruct the AP implemented by device 102 to set the UEM information for the user STA in at least one UEM field for the user STA, e.g., as described below.

In some demonstrative aspects, the at least one UEM field for the user STA may be located after the user info field for the user STA, e.g., as described below.

In some demonstrative aspects, controller 124 may be configured to control, trigger, cause, and/or instruct the AP implemented by device 102 to set a subfield in the user info field for the user STA to indicate that the user STA has a UEM assignment, e.g., as described below.

In some demonstrative aspects, controller 124 may be configured to control, trigger, cause, and/or instruct the AP implemented by device 102 to set a predefined MCS index in an MCS subfield in the user info field for the user STA, e.g., as described below.

In some demonstrative aspects, the predefined MCS index may be configured to indicate that the user STA has a UEM assignment, e.g., as described below.

In some demonstrative aspects, the predefined MCS index may include an MCS index 14, e.g., an EHT MCS 14 index.

In other aspects, the predefined MCS index may include any other MCS index.

In some demonstrative aspects, the at least one UEM field for the user STA may be configured, for example, according to a UEM field format, e.g., as described below.

In some demonstrative aspects, the UEM field format may include a station (STA) identifier (ID) (STA-ID) field to identify the user STA, e.g., as described below.

In some demonstrative aspects, the UEM field format may include a plurality of MCS subfields, for example, after the STA-ID field, e.g., as described below.

In other aspects, the UEM field format may include any other additional or alternative subfields.

In some demonstrative aspects, a first-in-order UEM field of the at least one UEM field for the user STA may include a frequency segment subfield, which may be configured, for example, to indicate a segmentation of the RU allocation for the user STA into the plurality of frequency sub-channels, e.g., as described below.

In some demonstrative aspects, a bit-length of a UEM field, e.g., each UEM field, for the user STA may be equal to a bit-length of the user info field for the user STA, e.g., as described below.

In other aspects, a bit-length of a UEM field, e.g., each UEM field, for the user STA may have any other length.

In some demonstrative aspects, the at least one UEM field for the user STA may be located after all user info fields in the trigger frame, e.g., as described below.

In some demonstrative aspects, the at least one UEM field for the user STA may be located immediately after the user info field for the user STA, e.g., as described below.

In other aspects, the at least one UEM field for the user STA may be located at any other location in the trigger frame.

In some demonstrative aspects, the trigger frame may include one or more other user info fields after the at least one UEM field for the user STA, e.g., as described below.

In some demonstrative aspects, controller 124 may be configured to control, trigger, cause, and/or instruct the AP implemented by device 102 to set a predefined MCS type value in an MCS type subfield in the user info field for the user STA, e.g., as described below.

In some demonstrative aspects, the predefined MCS type value may be configured to indicate that the user STA has a UEM assignment, e.g., as described below.

In some demonstrative aspects, the MCS type subfield may include a single-bit subfield, e.g., as described below.

In other aspects, the MCS type subfield may include a subfield of any other length.

In some demonstrative aspects, the predefined MCS type value may include a value of one, e.g., as described below.

In other aspects, the predefined MCS type value may include any other value.

In some demonstrative aspects, controller 124 may be configured to control, trigger, cause, and/or instruct the AP implemented by device 102 to set a UEM field indicator subfield in the user info field for the user STA, e.g., as described below.

In some demonstrative aspects, the UEM field indicator subfield may be configured to indicate a position of a first UEM field of the at least one UEM field for the user STA in the trigger frame, e.g., as described below.

In some demonstrative aspects, the UEM field indicator subfield may be configured to indicate a distance between the user info field for the user STA and the first UEM field of the at least one UEM field for the user STA, e.g., as described below.

In some demonstrative aspects, the at least one UEM field for the user STA may be configured, for example, according to a UEM field format, which includes a plurality of MCS subfields, e.g., as described below.

In some demonstrative aspects, a first-in-order UEM field of the at least one UEM field for the user STA may include a frequency segment subfield, which may be configured, for example, to indicate a segmentation of the RU allocation for the user STA into the plurality of frequency sub-channels, e.g., as described below.

In some demonstrative aspects, the at least one UEM field for the user STA may be located after all user info fields in the trigger frame, for example, when using the UEM field indicator, e.g., as described below.

In some demonstrative aspects, controller 124 may be configured to control, trigger, cause, and/or instruct the AP implemented by device 102 to set the UEM information for the user STA in a plurality of MCS subfields in the user info field for the user STA, e.g., as described below.

In some demonstrative aspects, controller 124 may be configured to control, trigger, cause, and/or instruct the AP implemented by device 102 to set a spatial configuration subfield in the user info field for the user STA, e.g., as described below.

In some demonstrative aspects, the spatial configuration subfield in the user info field for the user STA may be configured to indicate an assignment of the plurality of spatial streams for the user STA, e.g., as described below.

In some demonstrative aspects, the UEM information for the user STA may be configured to indicate an assignment of the plurality of MCSs to the plurality of spatial streams for the user STA, e.g., as described below.

In some demonstrative aspects, controller 124 may be configured to control, trigger, cause, and/or instruct the AP implemented by device 102 to process an UL PPDU from the user STA, for example, according to the assignment of the plurality of MCSs to the plurality of UL resources as indicated by the UEM information in the trigger frame transmitted by the AP, e.g., as described below.

In some demonstrative aspects, controller 124 may be configured to control, trigger, cause, and/or instruct the AP implemented by device 102 to determine the assignment of the plurality of MCSs to the plurality of UL resources for the user STA, for example, based on wireless communication conditions over the plurality of LTL resources, e.g., as described below.

In some demonstrative aspects, controller 124 may be configured to control, trigger, cause, and/or instruct the AP implemented by device 102 to set an other user info field in the trigger frame, e.g., as described below.

In some demonstrative aspects, the other user info field may include other RU allocation information to indicate an other RU allocation for an other user STA, e.g., as described below.

In some demonstrative aspects, an MCS subfield in the other user info field may include an MCS index to indicate an MCS to be applied over the entire RU allocation for the other user STA, e.g., as described below.

In some demonstrative aspects, controller 154 may be configured to control, trigger, cause, and/or instruct a user STA implemented by device 140 to process a user info field for the user STA in a trigger frame from an AP, for example, to identify an RU allocation for the user STA, for example, based on RU allocation information in the user info field for the user STA implemented by device 140, e.g., as described below.

In some demonstrative aspects, the received trigger frame may include the trigger frame transmitted by the AP implemented by device 102, e.g., as described above.

In some demonstrative aspects, controller 154 may be configured to control, trigger, cause, and/or instruct the user STA implemented by device 140 to process UEM information for the user STA in the trigger frame, for example, to identify an assignment of a plurality of MCSs to a plurality of UL resources in the RU allocation for the user STA, respectively, e.g., as described below.

In some demonstrative aspects, the plurality of LTL resources may include a plurality of frequency sub-channels in the RU allocation for the user STA, e.g., as described below.

In some demonstrative aspects, the plurality of LTL resources may include a plurality of spatial streams in the RU allocation for the user STA, e.g., as described below.

In some demonstrative aspects, controller 154 may be configured to control, trigger, cause, and/or instruct the user STA implemented by device 140 to transmit a TB LTL transmission from the user STA, for example, based on the assignment of the plurality of MCSs to the plurality of LTL resources in the RU allocation for the user STA, e.g., as described below.

In some demonstrative aspects, controller 154 may be configured to control, trigger, cause, and/or instruct the user STA implemented by device 140 to identify the UEM information for the user STA in at least one UEM field for the user STA, e.g., as described below.

In some demonstrative aspects, the at least one UEM field for the user STA may be located after the user info field for the user STA, e.g., as described below.

In other aspects, the at least one UEM field for the user STA may be located at any other location of the trigger frame.

In some demonstrative aspects, controller 154 may be configured to control, trigger, cause, and/or instruct the user STA implemented by device 140 to process a subfield in the user info field for the user STA to identify that the user STA has a UEM assignment, e.g., as described below.

In some demonstrative aspects, controller 154 may be configured to control, trigger, cause, and/or instruct the user STA implemented by device 140 to identify that the user STA has a UEM assignment, for example, based on a predefined MCS index in an MCS subfield in the user info field for the user STA, e.g., as described below.

In some demonstrative aspects, the predefined MCS index may include an MCS index 14, e.g., an EHT MCS 14 index.

In other aspects, the predefined MCS index may include any other MCS index.

In some demonstrative aspects, the at least one UEM field for the user STA may be configured, for example, according to a UEM field format, e.g., as described below.

In some demonstrative aspects, the LTEM field format may include a STA-ID field to identify the user STA, e.g., as described below.

In some demonstrative aspects, the UEM field format may include a plurality of MCS subfields after the STA-ID field, e.g., as described below.

In some demonstrative aspects, a first-in-order UEM field of the at least one UEM field for the user STA may include a frequency segment subfield, which may be configured, for example, to indicate a segmentation of the RU allocation for the user STA into the plurality of frequency sub-channels, e.g., as described below.

In some demonstrative aspects, a bit-length of a UEM field, e.g., each UEM field, for the user STA may be equal to a bit-length of the user info field for the user STA, e.g., as described below.

In other aspects, the UEM field for the user STA may have any other length.

In some demonstrative aspects, the at least one UEM field for the user STA may be located after all user info fields in the trigger frame, e.g., as described below.

In some demonstrative aspects, the at least one UEM field for the user STA may be located immediately after the user info field for the user STA, e.g., as described below.

In other aspects, the at least one UEM field for the user STA may be located at any other location in the trigger frame.

In some demonstrative aspects, the trigger frame may include one or more other user info fields after the at least one UEM field for the user STA, e.g., as described below.

In some demonstrative aspects, controller 154 may be configured to control, trigger, cause, and/or instruct the user STA implemented by device 140 to identify that the user STA has a UEM assignment, for example, based on a predefined MCS type value in an MCS type subfield in the user info field for the user STA, e.g., as described below.

In some demonstrative aspects, the MCS type subfield may include a single-bit subfield, e.g., as described below.

In some demonstrative aspects, the predefined MCS type value may include a value of one.

In other aspects, the predefined MCS type value may include any other value.

In some demonstrative aspects, controller 154 may be configured to control, trigger, cause, and/or instruct the user STA implemented by device 140 to process a UEM field indicator subfield in the user info field for the user STA, for example, to identify a position of a first UEM field of the at least one UEM field for the user STA in the trigger frame, e.g., as described below.

In some demonstrative aspects, controller 154 may be configured to control, trigger, cause, and/or instruct the user STA implemented by device 140 to process the UEM field indicator subfield, for example, to identify a distance between the user info field for the user STA and the first UEM field of the at least one UEM field for the user STA, e.g., as described below.

In some demonstrative aspects, the at least one UEM field for the user STA may be configured, for example, according to a UEM field format, which includes a plurality of MCS subfields, e.g., as described below.

In some demonstrative aspects, a first-in-order UEM field of the at least one UEM field for the user STA may include a frequency segment subfield, which may be configured, for example, to indicate a segmentation of the RU allocation for the user STA into the plurality of frequency sub-channels, e.g., as described below.

In some demonstrative aspects, the at least one UEM field for the user STA may be located after all user info fields in the trigger frame, for example, in case the user info field for the user STA includes the UEM field indicator subfield, e.g., as described below.

In some demonstrative aspects, controller 154 may be configured to control, trigger, cause, and/or instruct the user STA implemented by device 140 to identify the UEM information for the user STA in a plurality of MCS subfields in the user info field for the user STA, e.g., as described below.

In some demonstrative aspects, controller 154 may be configured to control, trigger, cause, and/or instruct the user STA implemented by device 140 to process a spatial configuration subfield in the user info field for the user STA, for example, to identify an assignment of the plurality of spatial streams for the user STA, e.g., as described below.

In some demonstrative aspects, controller 154 may be configured to control, trigger, cause, and/or instruct the user STA implemented by device 140 to process the UEM information for the user STA, for example, to identify an assignment of the plurality of MCSs to the plurality of spatial streams, e.g., as described below.

In some demonstrative aspects, device 102, device 140, and/or device 160 may be configured to implement an unequal MCS signaling mechanism, which may be configured to provide a technical solution to support allocation of unequal MCSs over a plurality of frequency sub-channels and/or spatial streams, e.g., as described below.

In some demonstrative aspects, the unequal MCS signaling mechanism may provide a technical solution to support delivering MCS assignment information to a plurality of users, for example, in a trigger frame, e.g., as described below.

In some demonstrative aspects, the unequal MCS signaling mechanism may provide a technical solution to support assignment of unequal MCS in TB UL transmissions, e.g., as described below.

In some demonstrative aspects, the unequal MCS signaling mechanism may utilize one or more user info fields , which may be configured to provide information of a plurality of MCSs to a user, e.g., as described below.

In some demonstrative aspects, the unequal MCS signaling mechanism may utilize one or more user info fields in trigger frames, which may be configured to provide unequal MCS information, e.g., as described below.

In some demonstrative aspects, the unequal MCS signaling mechanism may utilize one or more user info fields in trigger frames, which may be configured for TB PPDU UL transmissions with unequal MCSs, e.g., as described below.

In some demonstrative aspects, the unequal MCS signaling mechanism may utilize one or more UEM fields, which may be configured to provide, e.g., only provide, unequal MCS-related information, e.g., as described below.

For example, the unequal MCS-related information may include user ID information, e.g., an AID12 for a user, information of a minimum RU segment with different MCSs, a plurality of MCSs, and/or any other additional or alternative information.

In some demonstrative aspects, information, e.g., unequal MCS-related information, which is carried by UEM fields may vary, for example, based on a format and/or contents of user info fields, e.g., as described below.

In some demonstrative aspects, a user info field of a user may be configured to convey more specific information regarding a UEM field, e.g., as described below.

In some demonstrative aspects, the user info field for the user may include information regarding a position of a corresponding UEM field, which may, e.g., may only need to, carry a reduced, e.g., minimal, amount of information, information, for example, information regarding the minimum RU segment with a plurality of different MCSs, and/or information of a plurality of MCSs for the user. According to these aspects, the UEM field may not be required to include the user ID (AID12) for identification of the user to which the UEM field belongs, e.g., since the user may identify its UEM field based on the position information in the user info field.

In other aspects, a LTEM field may, e.g., should, carry user ID (AID12) for identification of the user to which the LTEM field belongs, e.g., in case the user info field for the user does not include information to identify the position of the LTEM field for the user, e.g., as described below.

In some demonstrative aspects, an unequal MCS user may have multiple UEM fields, for example, if a UEM field is not sufficient to carry all MCSs of the unequal MCS user, e.g., as described below.

In some demonstrative aspects, user info fields and UEM fields may, e.g., should, have the same bit length, for example, to enable users to identify beginning bits and/or end bits of each user info field and/or each UEM field, for example, namely the positions of one or more, e.g., each, of the user info fields and/or LTEM fields, e.g., as described below.

Some demonstrative aspects are described herein with respect to a trigger frame including one or more UEM fields to include UEM information for a UEM user, e.g., as described below.

In other aspects, the trigger frame may be configured to include the LTEM information for a user in a user info field for the user.

For example, a trigger frame, which may be configured, for example, in accordance with a new trigger frame type and/or sub-type, may be configured to accommodate a relatively long length, which may support relatively long user info fields. According to this example, the user info field for a UEM user may be long enough to accommodate a plurality of MCS subfields to signal a plurality of MCSs for the UEM user. According to this example, the trigger frame may be configured to carry the UEM information for the UEM user in a plurality of MCS subfields in the user info field for the user STA, e.g. instead of using UEM fields.

In some demonstrative aspects, device 102, device 140, and/or device 160 may be configured to communicate a trigger frame, which includes a user info list field including a plurality of user info fields for a plurality of users, e.g., as described below.

In some demonstrative aspects, the plurality of user info fields may include one or more user info fields for one or more UEM users, e.g., as described below.

In some demonstrative aspects, a user info field for a UEM user may include RU allocation information to indicate an RU allocation for the UEM user, e.g., as described below.

In some demonstrative aspects, device 102, device 140, and/or device 160 may be configured to communicate a trigger frame, which includes at least one UEM field for the UEM user, e.g., as described below.

In some demonstrative aspects, a UEM field for the UEM user may include UEM information configured to indicate an assignment of a plurality of MCSs to a plurality of LTL resources in the RU allocation for the UEM user, respectively, e.g., as described below.

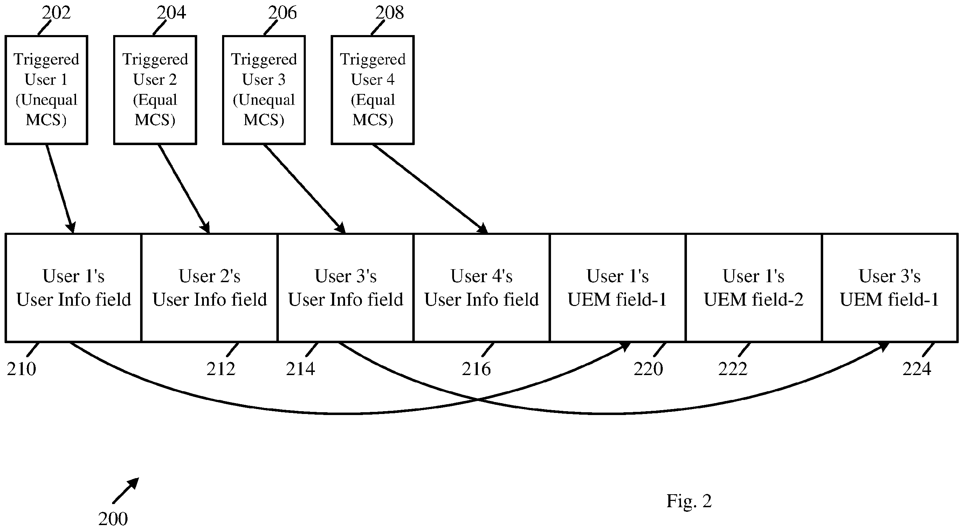

Reference is made to Fig. 2, which schematically illustrates a user info list field 200, in accordance with some demonstrative aspects.

For example, device 102 (Fig. 1) may be configured to generate and/or transmit a trigger frame including user info list field 200, which may be configured to include one or more user info fields for one or more users.

For example, device 140 (Fig. 1) and/or device 160 (Fig. 1) may include, operate as, perform a role of, and/or perform the functionality of the one or more users to receive and/or process a trigger frame including user info list field 200.

In some demonstrative aspects, an AP, e.g., an AP implemented by device 102 (Fig. 1), may determine an RU/MRU assignment, including RU/MRU allocations to the one or more users.

For example, the AP may transmit information of the RU/MRU allocation through user info fields for the one or more users.

In some demonstrative aspects, the trigger frame may include RU/MRU allocations for a plurality of users. For example, the plurality of users may include a user 202 (triggered user 1), a user 204 (triggered user 2), a user 206 (triggered user 3), and/or a user 208 (triggered user 4).

In some demonstrative aspects, as shown in Fig. 2, user 204 may include a non-UEM user (equal MCS user), which may be assigned with a single MCS for the entire RU/MRU allocation for the user 204; and/or user 208 may include a non-UEM user, which may be assigned with a single MCS for the entire RU/MRU allocation for the user 208.

In some demonstrative aspects, as shown in Fig. 2, user 202 may include a UEM user, which may be assigned with a plurality of MCSs for a plurality of UL resources in the RU/MRU allocation for the user 202; and/or user 206 may include a UEM user, which may be assigned with a plurality of MCSs for a plurality of UL resources in the RU/MRU allocation for the user 206.

In some demonstrative aspects, as shown in Fig. 2, the user info list field 200 in the trigger frame may include a user info field 210 for the user 202, which may indicate that user 202 has a UEM assignment.

In some demonstrative aspects, as shown in Fig. 2, the user info list field 200 in the trigger frame may include two UEM fields for the user 202, e.g., a UEM field 220 and UEM field 222, which may be configured to include UEM information for user 202. For example, the UEM information for user 202 may indicate an assignment of a plurality of MCSs to a plurality of LTL resources in the RU allocation for user 202, respectively.

In some demonstrative aspects, as shown in Fig. 2, the user info list field 200 in the trigger frame may include a user info field 212 for the user 204, e.g., after the user info field 210.

In some demonstrative aspects, as shown in Fig. 2, the user info list field 200 in the trigger frame may include a user info field 214 for the user 206, e.g., after the user info field 212. For example, the user info field 214 for the user 206 may indicate that user 206 has a UEM assignment.

In some demonstrative aspects, as shown in Fig. 2, the user info list field 200 in the trigger frame may include a UEM field 224 for the user 206, which may be configured to include UEM information for user 206. For example, the UEM information for user 206 may indicate an assignment of a plurality of MCSs to a plurality of UL resources in the RU allocation for user 206, respectively.

In some demonstrative aspects, as shown in Fig. 2, the user info list field 200 in the trigger frame may include a user info field 216 for the user 208, e.g., after the user info field 214.

In some demonstrative aspects, a user info field for a non-UEM user, e.g., user info field 212 for non-UEM user 204, and/or user info field 216 for non-UEM user 208, may include RU allocation information for the non-UEM user, which may be configured to define an RU allocation for the non-UEM user, and an indication of an MCS (equal MCS) to be applied to the RU allocation for the non-UEM user, e.g., in accordance with the *IEEE 802.11be Specification.*

In some demonstrative aspects, the user info field for the non-UEM user, e.g., user info field 212 for non-UEM user 204, and/or user info field 216 for non-UEM user 208, may include an EHT variant user info field, e.g., in accordance with the *IEEE 802.11be Specification.*

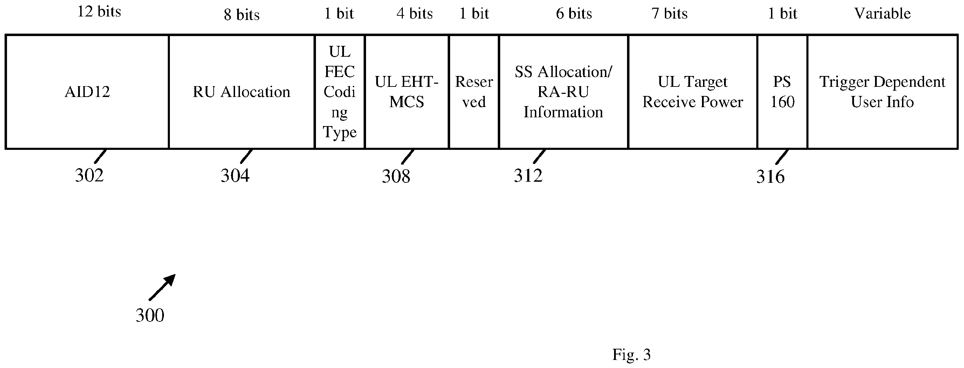

Reference is made to Fig. 3, which schematically illustrates an EHT variant user info field 300, which may be implemented in accordance with some demonstrative aspects.

In some demonstrative aspects, user info field 212 (Fig. 2) and/or user info field 216 (Fig. 2) may be configured according to a format of EHT variant user info field 300.

In some demonstrative aspects, as shown in Fig. 3, EHT variant user info field 300 may include an AID12 subfield 302 configured to identify a user, e.g., in accordance with the *IEEE 802.11be Specification.* For example, a user, e.g., each user, which receives a trigger frame including the EHT variant user info field 300 may be able to identify its user info field, for example, by finding an identification of the user, e.g., the AID12 of the user, in AID12 subfield 302.

In some demonstrative aspects, as shown in Fig. 3, EHT variant user info field 300 may include a plurality of subfields, e.g., including an RU allocation subfield 304 and a PS160 subfield 316, which may be configured to indicate to the user a size and/or a location of an RU allocated to the user.

For example, a user, e.g., each user, which receives a trigger frame including the an EHT variant user info field 300 may be able to identify the size and/or location of an RU allocated to the user based on the information in the RU allocation subfield 304 and the PS160 subfield 316, for example, along with information in an LTL BW subfield, e.g., in a Common Info field and/or an UL BW Extension subfield in a Special User Info field of the trigger frame (not shown in Fig. 3).

In some demonstrative aspects, EHT variant user info field 300 may support a single RU allocation for a user, e.g., each user, such that each user may be allowed, e.g., may only be allowed, to be assigned with one RU/MRU.

In some demonstrative aspects, as shown in Fig. 3, EHT variant user info field 300 may include an UL EHT-MCS subfield 308, which may be configured to indicate to the user its assigned MCS, e.g., a single MCS to be used over the entire RU/MRU allocation for the user.

In some demonstrative aspects, as shown in Fig. 3, EHT variant user info field 300 may include a Spatial Stream (SS) Allocation/RA-RU Information subfield 312, which may be configured to indicate to the user its assigned spatial streams (SSs).

For example, EHT variant user info field 300 may support a single MCS allocation for a user, e.g., each user, such that each user may have, e.g., may only have, one MCS which may be represented by a 4-bit MCS index value in UL EHT-MCS subfield 308.

Referring back to Fig. 2, in some demonstrative embodiments, UEM fields, for example, all UEM fields, e.g., UEM field 220, UEM field 222, and/or UEM field 224, may be, e.g., may always be, located after the user info fields in the user info list 200, e.g., after the last user info field 216.

In some demonstrative aspects, padding for trigger frames may be, e.g., should be, changed to accommodate an addition of one or more UEM fields, which may be added at the end of the user info list 200 of the trigger frame.

For example, in case of a user info list including only user info fields for users with equal MCS, padding bits may follow the last bit of a user info field addressed to the last user.

In some demonstrative aspects, as shown in Fig. 2, in case of a user info list, e.g., user info list 200, includes one or more user info fields and UEM fields for users with unequal MCS, it may be defined that padding bits may follow the last bit of the last user info field or UEM field addressed to the last user.

In some demonstrative aspects, a user receiving the trigger frame including the user info list 200 may identify its corresponding user info field, for example, by decoding and/or obtaining its user ID (AID12). For example, the user 202 may identify that the user info field 210 is for the user 202, for example, based on identifying that the user info field 210 includes the user ID (AID12) of user 202; the user 204 may identify that the user info field 212 is for the user 204, for example, based on identifying that the user info field 212 includes the user ID (AID12) of user 204; the user 206 may identify that the user info field 214 is for the user 206, for example, based on identifying that the user info field 214 includes the user ID (AID12) of user 206; and/or the user 208 may identify that the user info field 216 is for the user 208, for example, based on identifying that the user info field 216 includes the user ID (AID 12) of user 208.

In some demonstrative aspects, in case a user is a non-UEM, the user info field for the user may include a user info field according to a format for a non-UEM user. For example, user info field 212 and/or user info field 216 may include the format of user info field 300 (Fig. 3), in which UL EHT-MCS subfield 308 (Fig. 3) may provide the non-UEM user with its single MCS. According to this example, the non-UEM user may operate as a user, e.g., a traditional user, who may stop reading other fields in the user info list 200, e.g., after finding its user info field.

In some demonstrative aspects, in case a user is a UEM, the user field for the user may indicate to the user that the user is a UEM user, e.g., as described below. For example, user info field 210 may include an indication that that user 202 is a UEM user; and/or user info field 214 may include an indication that user 206 is a UEM user, e.g., as described below.

In some demonstrative aspects, an UL EHT-MCS subfield in a user info field of a UEM user may not provide any MCS for the UEM user, e.g., as described below.

In some demonstrative aspects, the UL EHT-MCS subfield in the user info field of the UEM user may be utilized to provide unequal MCS-related information for the UEM user, e.g., as described below.

In some demonstrative aspects, the UL EHT-MCS subfield in the user info field of the UEM user may be utilized to provide an indication that the user of the user info field is a UEM user having a UEM assignment, e.g., as described below.

In some demonstrative aspects, the UL EHT-MCS subfield in the user info field of the UEM user may be utilized to provide an indication of a UEM field including a plurality of unequal MCSs assigned to the UEM user, e.g., as described below.

In some demonstrative aspects, the UL EHT-MCS subfield in the user info field of the UEM user may be configured to provide a position of a UEM field including a plurality of unequal MCS assigned to the UEM user, e.g., as described below.

In some demonstrative aspects, the UEM user may identify the user info field for the UEM user, and, for example, after reading the user info field for the UEM user, the UEM user may seek for its UEM field to obtain a plurality of unequal MCSs in a RU allocation for the user.

For example, the UEM user may identify a user info field corresponding to the UEM user through seeking the user info fields in the user info list 200 until identifying a user info field including the AID12 of the UEM user in an AID12 subfield of the user info field.

For example, the user may become aware that the user is a UEM user, for example, through UEM-related information in the user info field, e.g., as described below.

For example, the UEM user may continue to parse and/or seek for corresponding UEM fields, for example, until obtaining all the UEM fields corresponding to the UEM user. For example, the UEM user may determine that all the corresponding UEM fields for the UEM user have been obtained, for example, when the UEM user finds no UEM fields matching its AID12 anymore, for example, rather than stopping the parsing once finding its user info field.

In some demonstrative aspects, the UEM field of the UEM user may be identified by the AID12 of the UEM user, e.g., as described below.

In some demonstrative aspects, the UEM field of the UEM user may be located and/or pinpointed by the user info field of the UEM user, for example, if the user info field conveys position information of the UEM field corresponding to the UEM user, e.g., as described below.

In some demonstrative aspects, the UEM user may find and/or decode the corresponding UEM field for the UEM user, and obtain a plurality of unequal MCSs over a plurality of LTL resources for the LTEM user, e.g., as described below.

For example, the plurality of LTL resources for the UEM user may include a plurality of frequency sub-channels, a plurality of spatial streams, and/or both frequency sub-channels and spatial streams.

In some demonstrative aspects, a configuration of a user info list, e.g., user info list 200, to include the LTEM fields, e.g., all UEM fields, after the user info fields, e.g., after all user info fields, may provide a technical solution to support a reduced overhead for triggered users, for example, especially for triggered non-UEM users.

For example, a triggered non-unequal MCS user may stop its operations, for example, until finding and/or decoding its user info field, which only possesses a user info field. For example, when the LTEM fields are located after all the user info fields, e.g., as shown in Fig. 2, a non-unequal MCS user may, e.g., may only need to, decode a limited number of other users' user info fields, for example, until finding its own user info field with less overhead.

In some demonstrative aspects, a configuration of a user info list, e.g., user info list 200, to include the UEM fields, e.g., all UEM fields, after the user info fields, e.g., after all user info fields, may provide a technical solution to support a reduced overhead for unequal MCS users, for example, if user info fields are configured to provide, e.g., directly provide, unequal MCS users with the position of their UEM fields, e.g., as described below.

In some demonstrative aspects, a user info list, e.g., user info list 200, may be configured to include the UEM fields, e.g., all UEM fields, after the user info fields, e.g., after all user info fields, e.g., as described above.

In some demonstrative aspects, a user info list may be configured to include the UEM fields of a UEM user, e.g., all UEM fields of the UEM user, after the user info field for the user, for example, directly after the user info field for the user, e.g., as described below.

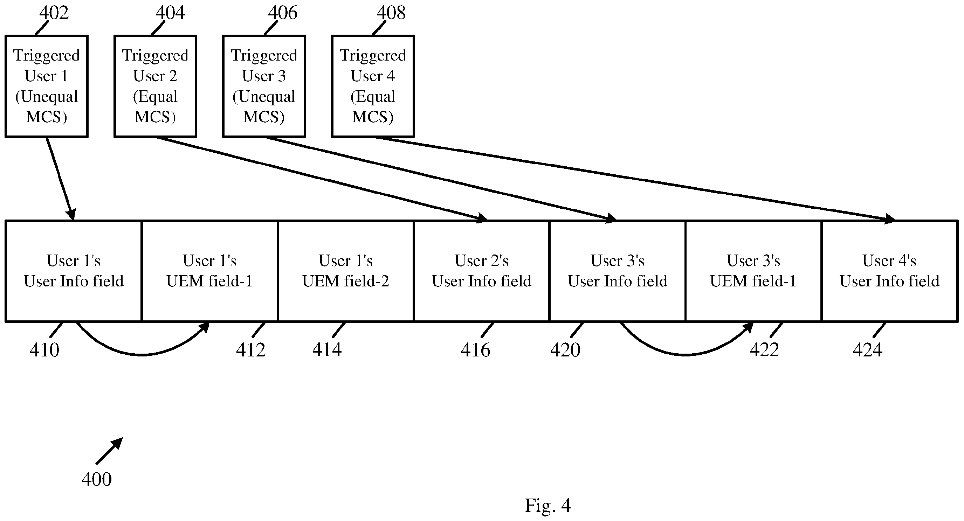

Reference is made to Fig. 4, which schematically illustrates a user info list field 400, in accordance with some demonstrative aspects.

For example, device 102 (Fig. 1) may be configured to generate and/or transmit a trigger frame including user info list field 400, which may be configured to include one or more user info fields for one or more users.

For example, device 140 (Fig. 1) and/or device 160 (Fig. 1) may include, operate as, perform a role of, and/or perform the functionality of the one or more users to receive and/or process a trigger frame including user info list field 400.

In some demonstrative aspects, an AP, e.g., an AP implemented by device 102 (Fig. 1), may determine an RU/MRU assignment, including RU/MRU allocation to the one or more users.

For example, the AP may transmit information of the RU/MRU allocation through user info fields for the one or more users.

In some demonstrative aspects, the trigger frame may include RU/MRU allocations for a plurality of users. For example, the plurality of users may include a user 402 (triggered user 1), a user 404 (triggered user 2), a user 406 (triggered user 3), and/or a user 408 (triggered user 4).

In some demonstrative aspects, as shown in Fig. 4, user 404 may include a non-UEM user (equal MCS user), which may be assigned with a single MCS for the entire RU/MRU allocation for the user 404; and/or user 408 may include a non-UEM user, which may be assigned with a single MCS for the entire RU/MRU allocation for the user 408.

In some demonstrative aspects, as shown in Fig. 4, user 402 may include a UEM user, which may be assigned with a plurality of MCSs for a plurality of UL resources in the RU/MRU allocation for the user 402; and/or user 406 may include a UEM user, which may be assigned with a plurality of MCSs for a plurality of UL resources in the RU/MRU allocation for the user 406.

In some demonstrative aspects, as shown in Fig. 4, the user info list field 400 in the trigger frame may include a user info field 410 for the user 402, which may indicate that user 402 has a UEM assignment.

In some demonstrative aspects, as shown in Fig. 4, the user info list field 400 in the trigger frame may include two UEM fields for the user 402, e.g., a UEM field 412 and UEM field 414, which may be configured to include UEM information for user 402. For example, the UEM information for user 402 may indicate an assignment of a plurality of MCSs to a plurality of LTL resources in the RU allocation for user 402, respectively.

In some demonstrative aspects, as shown in Fig. 4, the UEM fields for the user 402 may be after, e.g., directly after, the user info field 410 for the user 402.

In some demonstrative aspects, as shown in Fig. 4, the user info list field 400 in the trigger frame may include a user info field 416 for the user 404, e.g., after the UEM fields 412 and 414.

In some demonstrative aspects, as shown in Fig. 4, the user info list field 400 in the trigger frame may include a user info field 420 for the user 406, e.g., after the user info field 416. For example, the user info field 420 for the user 406 may indicate that user 406 has a UEM assignment.

In some demonstrative aspects, as shown in Fig. 4, the user info list field 400 in the trigger frame may include a UEM field 422 for the user 406, which may be configured to include UEM information for user 406. For example, the UEM information for user 406 may indicate an assignment of a plurality of MCSs to a plurality of UL resources in the RU allocation for user 406, respectively.

In some demonstrative aspects, as shown in Fig. 4, the user info list field 400 in the trigger frame may include a user info field 424 for the user 408, e.g., after the UEM field 422.

In some demonstrative aspects, a user info field for a non-UEM user, e.g., user info field 416 for non-UEM user 404, and/or user info field 424 for non-UEM user 408, may include RU allocation information for the non-UEM user, which may be configured to define an RU allocation for the non-UEM user, and an indication of an MCS (equal MCS) to be applied to the RU allocation for the non-LTEM user, e.g., in accordance with the *IEEE 802.11be Specification.* For example, the user info field 416 and/or the user info field 424 may be configured according to the EHT variant user info field 300 (Fig. 3), e.g., as described above.

In some demonstrative aspects, as shown in Fig. 4, the UEM fields corresponding to a UEM user may be located, for example, right after a user info field corresponding to that UEM user.

For example, as shown in Fig. 4, UEM field 412 and/or UEM field 414 for user 402 may be located immediately after user info field 410 for user 402.

For example, as shown in Fig. 4, UEM field 422 for user 406 may be located immediately after user info field 420 for user 406.

In some demonstrative aspects, when the UEM fields for the UEM user are located right after the user info field for the user, e.g., as shown in Fig. 4, the UEM fields, e.g., each UEM field, may be configured to, e.g., shall be configured to, start with a user identification (AID12) of the LTEM user to which the UEM belongs.

In some demonstrative aspects, user 404 and/or user 408, which may include a non-unequal MCS user, may operate in accordance with the *IEEE 802.11be Specification.*

For example, a non-UEM user may stop parsing the user info list 400, for example, after finding a corresponding user info field with a user ID, e.g., an AID12, matching the user ID of the user, and after obtaining the user's single MCS information from the respective user info field. For example, user 404 may stop parsing the user info list 400 after finding user info field 416 and obtaining from the user info field 416 a single MCS for user 404; and/or user 408 may stop parsing the user info list 400 after finding user info field 424 and obtaining from the user info field 424 a single MCS for user 408.

In some demonstrative aspects, a user, which is identified as a UEM user may continue, e.g., may need to continue, to parse the user info list 400, for example, after finding a corresponding user info field with its AID12, for example, until the UEM user is able to collect one or more UEM fields, e.g., all of the UEM fields, for the UEM user. For example, the UEM user may continue to parse the user info list 400, for example, until no UEM fields matching its AID12 are left anymore.

For example, the user 402 may parse the user info list 400 to identify the user info field 410 including the user ID, e.g., the AID12, of the user 402. For example, the user 402 may identify that the user 410 is a UEM e.g., based on UEM-related information in the user field 410, e.g., as described below. For example, the user 402 may continue parsing the user info list 400, for example, until the user 402 is able to collect the UEM fields 412 and 414 for the user 402.

For example, the user 406 may parse the user info list 400 to identify the user info field 420 including the user ID, e.g., the AID12, of the user 406. For example, the user 406 may identify that the user 406 is a UEM e.g., based on UEM-related information in the user field 420, e.g., as described below. For example, the user 406 may continue parsing the user info list 400, for example, until the user 406 is able to collect the UEM field 422 for the user 406.

In some demonstrative aspects, one or more UEM fields, e.g., each of the UEM fields, in the user list field 400 may, e.g., should, have the same bit length as the bit length of each of the user info fields in the in the user list field 400.

In some demonstrative aspects, a UEM field, e.g., each of the UEM fields, in the user list field 400 may, e.g., should, be identified by a user ID, e.g., AID12, of the user to which the LTEM belongs.

In some demonstrative aspects, when the UEM fields for a UEM user are located right after the user info field for the user, e.g., as shown in Fig. 4, there may be no need, to provide the position information of UEM fields in the user info field, e.g. since the user's UEM fields are located right after its user info field and among other users' user info fields.

In some demonstrative aspects, for example, when the UEM fields for a UEM user are located right after the user info field for the user, e.g., as shown in Fig. 4, there may be a need to identify a UEM with the user ID, e.g., the AID12, of the user. For example, in case the UEM fields for a LTEM user are located right after the user info field for the user, and a LTEM field does not start with an AID12 subfield, then there may be a possibility that the first 12 bits of the UEM field may, e.g., accidentally, be the same as an AID12 of another user. According to this example, the other user may, e.g., incorrectly, identify the UEM field as its own UEM field.

In some demonstrative aspects, a user info list may be configured to include the UEM fields of a UEM user, e.g., all UEM fields of the UEM user, after the user info field for the user, for example, directly after the user info field for the user, e.g., as described above with reference to Fig. 4. This configuration of the user info list may provide a technical solution for signaling UEM information, which may have some overhead, e.g., for non-UEM users. For example, a non-unequal MCS user may have to decode more fields, for example, including other users' user info fields and UEM fields, which may be located in front of a user info field for the non-unequal MCS user. According to this example, the non-unequal MCS user may have to decode more fields before decoding its own user info field.

In some demonstrative aspects, the user info list may be configured to include the UEM fields of a UEM user immediately after the user info field for the user, for example, to provide a technical solution to support reduced overhead for unequal MCS users.

For example, a UEM user may ignore the rest of the user info fields and/or UEM fields in the user info list, for example, after decoding a user info field for the UEM user and all the UEM fields for0 the UEM user, which are right after the user info field for the user.

For example, in case it is defined that the user ID, e.g., the AID12, is to be applied in both user info fields and UEM fields for user identification, the configuration of the user info list to include the UEM fields of a UEM user immediately after the user info field for the user may provide a technical solution with reduced overhead, e.g., compared to the configuration of the user info list to include the UEM fields after all user info fields. For example, in case the user info list is configured to include the UEM fields after all user info fields, then unequal MCS users may be required to decode all user info fields and all UEM fields, e.g., before a UEM user may find and decode its own UEM fields.

In some demonstrative aspects, the user info list may be configured to include the UEM fields of a UEM user immediately after the user info field for the user, for example, to provide a technical solution to provide more time available for UEM users to prepare upcoming TB PPDU transmissions. For example, in case the UEM fields are located after all user info fields, the UEM user may have limited time left to prepare for upcoming TB PPDU transmissions.

Referring back to Fig. 1, in some demonstrative aspects, device 102, device 140, and/or device 160 may be configured to implement an unequal MCS signaling mechanism, which may utilize a user info field format, which may be applied, e.g., directly applied, in accordance with the *IEEE 802.11be Specification,* for example, even without any additional changes to trigger frames and/or preliminary conditions, e.g., as described below.

For example, the user info field format may be applicable for trigger frames including user info list field 200 (Fig. 2), and/or user info list field 400 (Fig. 4).

In some demonstrative aspects, the unequal MCS signaling mechanism may utilize a user info field format, which may be configured to identify a UEM field of a UEM user, for example, by a user ID, e.g., AID12 of the user, e.g., as described below.

In some demonstrative aspects, the unequal MCS signaling mechanism may utilize a user info field format, which may be configured to notify a user whether the user is an unequal MCS user, e.g., as described below.

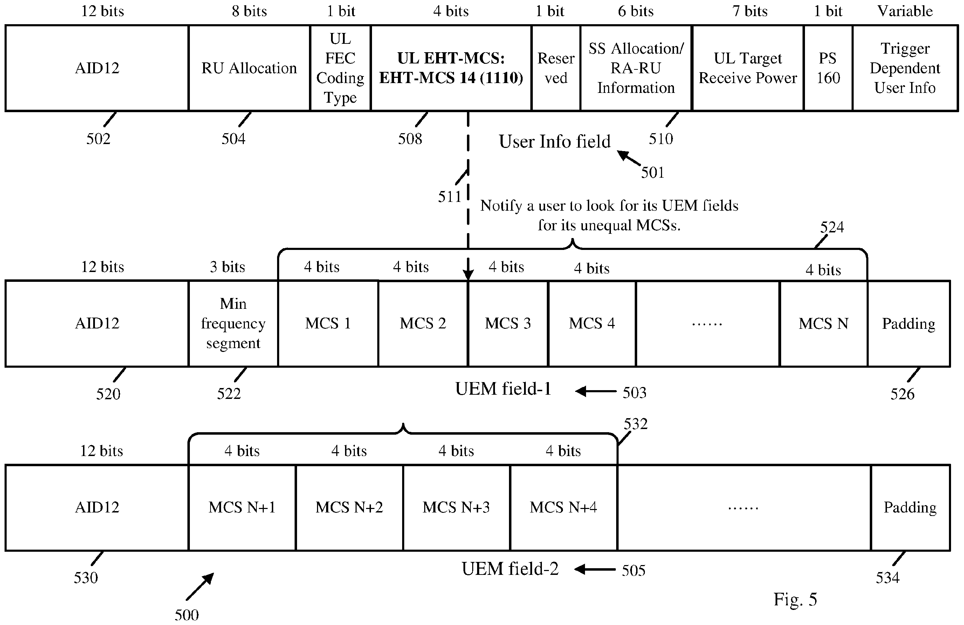

Reference is made to Fig. 5, which schematically illustrates a UEM signaling format 500, in accordance with some demonstrative aspects.

For example, device 102 (Fig. 1) may be configured to generate and/or transmit a trigger frame, which may include a user info list configured to include UEM information for a UEM user according to UEM signaling format 500.

For example, device 140 (Fig. 1) and/or device 160 (Fig. 1) may include, operate as, perform a role of, and/or perform the functionality of one or more users to receive and/or process a trigger frame including UEM information for a UEM user according to UEM signaling format 500.

In some demonstrative aspects, as shown in Fig. 5, UEM signaling format 500 may include at least one user info field 501 corresponding to the UEM user, e.g., as described below.

For example, user info field 210 (Fig. 2) may include user info field 501 to signal LTEM-related information to the UEM user 202 (Fig. 2); user info field 214 (Fig. 2) may include user info field 501 to signal UEM-related information to the UEM user 206 (Fig. 2); user info field 410 (Fig. 4) may include user info field 501 to signal UEM-related information to the UEM user 402 (Fig. 4); and/or user info field 420 (Fig. 4) may include user info field 501 to signal UEM-related information to the UEM user 406 (Fig. 4).

In some demonstrative aspects, as shown in Fig. 5, user info field 501 may be configured in compliance with a format of EHT variant user info field 300 (Fig. 3), e.g., as described below.

In some demonstrative aspects, as shown in Fig. 5, user info field 501 may include an AID12 subfield 502 to identify a user to which the user info field 501 belongs.

In some demonstrative aspects, a user may find and decode its corresponding user info field in a received trigger frame, for example, based on the user ID, e.g., AID12, in the user info field.

In some demonstrative aspects, as shown in Fig. 5, user info field 501 may include an UL EHT-MCS subfield 508, which may be configured to indicate that the is a UEM user, which has a UEM assignment.

In some demonstrative aspects, as shown in Fig. 5, UL EHT-MCS subfield 508 may include a predefined MCS index, e.g., the EHT-MCS 14 (1110) index, or any other suitable predefined MCS index, for example, instead of actual MCS information for the user.

For example, the predefined MCS index, e.g., the EHT-MCS 14 (1110) index, may indicate to the user that the user is a UEM user, which has a UEM assignment.

For example, the EHT-MCS 14 (1110) index may be used to indicate the UEM user, for example, since the EHT-MCS 14 (1110) index is currently not being used in a user info field for a non-UEM user for TB PPDU UL transmissions.

In some demonstrative aspects, the EHT-MCS 14 (1110) index may be utilized, for example, as a signaling, e.g., particularly, for UEM users rather than an index of MCSs. For example, a user may become aware of the fact that the user is a UEM user, for example, if the user obtains the EHT-MCS 14 (1110) index after decoding LTL EHT-MCS subfield 508 in its user info field 502. According to this example, the EHT-MCS 14 (1110) index may indicate that the UEM user that the UEM user is to search for one or more corresponding UEM fields, for example, to obtain the UEM information indicating the unequal MCSs for the UEM user.

In some demonstrative aspects, the UL EHT-MCS subfield 508 be set to any other suitable EHT-MCS index, for example, an MCS index in the range between EHT-MCS 0 and EHT-MCS 13 or an EHT-MCS 15, which may be used by a non-UEM user. For example, the non-UEM user may decode the UL EHT-MCS subfield 508 to provide a single MCS for the non-LTEM user.

In some demonstrative aspects, as shown in Fig. 5, AID12 subfield 502 may be followed by an RU allocation subfield 504, which may include RU allocation information for the user, for example, RU sizes and/or any other RU allocation information.

In some demonstrative aspects, as indicated by arrow 511, a user may be identified as a UEM user, for example, when UL EHT-MCS subfield 508 include the predefined MCS index, e.g., the EHT-MCS 14 (1110) index.

In some demonstrative aspects, as shown in Fig. 5, the user info list according to UEM signaling format 500 may include one or more UEM fields, e.g., a UEM field 503 (UEM field-1) and/or a UEM field 505 (UEM field-2), for the UEM user of user info field 501.

In some demonstrative aspects, as shown in Fig. 5, UEM field 503 and/or a UEM field 505 may have one or more, e.g., three, types of subfields, including an AID12 subfield, a minimum (min) frequency segment subfield, and/or an MCS subfield, e.g., as described below.

In some demonstrative aspects, UEM field 503 and/or UEM field 505 may be configured to have a same bit length as user info field 501, for example, to support users in locating a position of each user info field and/or each UEM field.

In some demonstrative aspects, a UEM field, e.g., UEM field 503 and/or a UEM field 505, may be configured to have a total length, which is the same as or shorter than a length of user info field 501, for example, to support users in locating a position of each user info field and/or each UEM field.

In some demonstrative aspects, as shown in Fig. 5, a UEM field, e.g., UEM field 503 and/or LTEM field 505, may be identified by decoding an AID12 subfield, for example, similar to user info fields.

In some demonstrative aspects, as shown in Fig. 5, a UEM field for a user, e.g., UEM field 503 and/or UEM field 505, may include the user ID field, e.g., the AID12 field, for example, in case the UEM field for the user is located immediately after the user info field for the user, e.g., as described above with reference to Fig. 4.

In some demonstrative aspects, as shown in Fig. 5, a UEM field for a user, e.g., UEM field 503 and/or UEM field 505, may optionally exclude the user ID field, e.g., the AID12 field, for example, in case the UEM field for the user is located after all user info fields, e.g., as described above with reference to Fig. 2.

In some demonstrative aspects, a LTEM field for a user, e.g., UEM field 503 and/or LTEM field 505, may be configured to provide information of MCS assignments for the user, for example, in the form of a minimum frequency segment and/or MCSs, e.g., as described below.

In some demonstrative aspects, a first-in-order UEM field (UEM field 1) of a UEM user may be configured according to a UEM field format, which may start with a 12-bit AID12 subfield, followed by a 3-bit min frequency segment subfield, which may be followed by one or more, e.g., *N,* 4-bit MCS subfields, and padding. For example, as shown in Fig. 5, a first-in-order UEM field, e.g., UEM field 503, may include an AID12 subfield 520, a min frequency segment subfield 522, followed by NMCS subfields 524, and any padding 526, if required.

In some demonstrative aspects, a non first-in-order UEM field of a UEM user may be configured according to a UEM field format, which may carry, e.g., may only carry, the user's identifier, e.g., in the form of a 12-bit AID12 subfield, and MCS information, which may include one or more 4-bit MCS subfields, e.g., followed by padding, if required. For example, as shown in Fig. 5, a non-first in order UEM field, e.g., UEM field 505 may include an AID12 subfield 530, and one or more MCS subfields 532, e.g., followed by padding 534, if required.

In some demonstrative aspects, min frequency segment subfield 510 may be configured to specify a partition of an RU for the UEM user, e.g., by using 3 bits to inform the LTEM user of its minimum frequency segment with different MCSs. For example, a min frequency segment subfield may be used to indicate the subcarrier number assigned with a different MCS in an RU.

In one example, the size and/or bandwidth of a user's RU may be provided by the RU allocation subfield of the user's user info field, e.g., RU allocation subfield 504. For example, a user's RU may have 996 subcarriers. According to this example, the min frequency segment subfield 522 may be set to indicate that each 242 subcarriers in the 996 subcarriers may be assigned with an unequal MCS.

For example, the user may determine, e.g., based on the EU allocation subfield 504 and the min frequency segment subfield 522, that the user should expect four MCSs in each spatial stream of its 996-subcarrier RU. In one example, the user's RU may be equally split into multiple partitions with 26 subcarriers, 52 subcarriers, 106 subcarriers, 242 subcarriers, 484 subcarriers, 996 subcarriers, 2×996 subcarriers, or the like. For example, min frequency segment subfield 522 may utilize 3 bits to represent all possible partitions with unequal MCSs.

In some demonstrative aspects, a UEM user may use the information in min frequency segment subfield 522 to determine how many MCSs the LTEM user is to expect in the following MCS subfields.

For example, in case an RU assigned to a user has M subcarriers, and a minimum frequency segment for the user is A, then a number of unequal MCSs assigned to the user in each spatial stream may be determined as *ceil(N*/*A)*, wherein ceil(-) represents rounding to the nearest integer greater than or equal to (·).

For example, in case a number of spatial streams of the user is *S*, then the user may have a total of *S* × *ceil(N*/*A)* MCSs. For example, the number of spatial streams may be acquired by the user based on SS Allocation/RA-RU Information subfield 510 in user info field 501.

In some demonstrative aspects, as shown in Fig. 5, the UEM field 503 may include a plurality of MCS subfields 524. For example, an MCS subfield 524 may include a 40bit subfield to carry a 4-bit binary number representing an MCS index.

In some demonstrative aspects, as shown in Fig. 5, padding may be applied, for example, in order to make sure that each UEM field has the same length as the user info fields.

In some demonstrative aspects, one or more non first-in-order LTEM fields may follow a first-in-order LTEM field, for example, if a single UEM field may not be sufficient to carry all unequal MCSs. For example, as shown in Fig. 5, non first-in-order LTEM field 505 may follow first-in-order UEM field 503.

In some demonstrative aspects, as shown in Fig. 5, a user may have more than one UEM fields, for example, when a UEM field may be unable to carry all unequal MCSs.

In some demonstrative aspects, as shown in Fig. 5, non first-in-order UEM fields, e.g., UEM field 505, may have, e.g., only have, an AID12 subfield 530 to identify the UEM user, followed by one or more MCS subfields 532, which may contain the rest of unequal MCSs that first-in-order UEM field 503 is unable to carry, for example, due to insufficient space.

For example, if the UEM user is unable to obtain *S* × *ceil(N*/*A)* MCSs in the first-in-order UEM field 503, the UEM user may know it should search for other UEM fields, for example, until attaining all *S* × *ceil(N*/*A)* MCSs.

In some demonstrative aspects, a user, e.g., a STA implemented by device 140 (Fig. 1), may receive a trigger frame including UEM signaling format 500.

For example, the user may find and decode its user info field, e.g., user info field 501, in the received trigger frame, for example, by searching for the user identification (AID12) of the user.

For example, in case the user detects that the EHT-MCS 14 (1110) is contained in the UL EHT-MCS subfield 508, the user may determine that it is an unequal MCS user. For example, based on the determination that the user is a UEM user, the user may seek for its UEM fields, which carry its unequal MCS information. Alternatively, in case the user detects any other EHT-MCSs (e.g., in the range between 0-13, or 15) in the UL EHT-MCS subfield 508, the user may process its user info field as a non-unequal MCS user, who gets its single MCS from the UL EHT-MCS subfield 508.

For example, in case the user is a UEM user, the user may find its first UEM field (UEM field-1), for example, using the AID12 subfield.

For example, the UEM user may calculate the total number of unequal MCSs for the user, for example, based on the RU size provided by the RU Allocation subfield 504 of the user info field 501, the size of the minimum frequency segments with unequal MCSs, e.g., as provided by the min frequency segment subfield 522 of its first UEM field (UEM field-1), and the number of spatial streams, e.g., provided by the SS Allocation/RA-RU Information subfield 510 of the user info field 501.

For example, the UEM user may determine how many UEM fields the UEM user may have, and may find any of its other UEM fields, e.g., the UEM field-2, for example, through the AID12. For example, the UEM user may decode any UEM fields for the UEM user, e.g., until obtaining all its unequal MCSs.

In some demonstrative aspects, UEM signaling format 500 may provide a technical solution to support signaling of unequal MCS for TB UL PPDU transmissions, for example, by redefining the use of EHT-MCS 14 in TB transmissions and introducing the new field format, e.g., the UEM field format, for example, with an excellent compatibility to the *IEEE 802.11be Specification.* For example, the excellent compatibility may be achieved by preserving the format and/or size of user info fields, e.g., in compliance with the *IEEE 802.11be Specification.* According to this example, UEM signaling format 500 may easily be applied in current Wi-Fi 7 systems, e.g., in accordance with the *IEEE 802.11be Specification.*

Referring back to Fig. 1, in some demonstrative aspects, device 102, device 140, and/or device 160 may be configured to implement an unequal MCS signaling mechanism, which may be configured to provide a technical solution to support allocation of unequal MCSs over a plurality of frequency sub-channels and/or spatial streams, e.g., as described below.

In some demonstrative aspects, the unequal MCS signaling mechanism may provide a technical solution to support signaling UEM information corresponding to a plurality of unequal MCSs for a plurality of users, for example, in a trigger frame, e.g., as described below.

In some demonstrative aspects, the unequal MCS signaling mechanism may provide a technical solution to support resource (bits) saving and low overhead, for example, when signaling UEM information corresponding to a plurality of unequal MCSs, e.g., as described below.

In some demonstrative aspects, the unequal MCS signaling mechanism may provide a technical solution to support providing, e.g., directly providing, position information of LTEM fields to one or more unequal MCS users, e.g., as described below.

In some demonstrative aspects, providing, e.g., directly providing, the position information of the UEM fields to the one or more unequal MCS users may provide a technical solution with reduced overhead, for example, by excluding the AID12 subfields, which occupy 12 bits each, from the UEM fields, e.g., as described below.

In some demonstrative aspects, providing, e.g., directly providing, the position information of the UEM fields to the one or more unequal MCS users may provide a technical solution where unequal MCS users may not need to blindly scan and/or decode all UEM fields to find the UEM fields that match their AID12.

In some demonstrative aspects, the unequal MCS signaling mechanism may be configured to utilize the user info field of a UEM user to provide to the user position information to indicate a position of the UEM fields for the UEM user, e.g., as described below.

In some demonstrative aspects, the unequal MCS signaling mechanism may utilize a trigger frame, which may include one or more user info fields configured according to user info list field format 200 (Fig. 2), e.g., as described below.

For example, utilizing the trigger frame including user info list field format 200 (Fig. 2) may enable removing AID12 subfields from one or more UEM fields of the user info list field.

For example, the AID12 fields may not be removed from UEM fields located among user info fields, e.g., according to user info list field format 400 (Fig. 4). For example, if a UEM field configured according to user info list field format 400 (Fig. 4) does not start with an AID12, the first 12 bits of the UEM field may be accidentally interpreted by another user to incorrectly identify the UEM field as its own UEM field, e.g., as described above.

In some demonstrative aspects, the unequal MCS signaling mechanism may utilize a trigger frame, which may be configured to support TB UL PPDU transmissions, which comply, for example, with next generation of Wi-Fi systems, e.g., according to a future *802.11 UHR (Wi-Fi 8) Specification,* e.g., as described below.

In some demonstrative aspects, the unequal MCS signaling mechanism may implement one or more additional changes to trigger frames, for example, to accommodate the signaling of the LTEM information, e.g., as described below.

For example, a new trigger frame format may be defined, which may lack compatibility with the *IEEE 802.11be Specification.* According to this example, users, which communicate in accordance with *IEEE 802.11be Specification* and/or previous Wi-Fi system versions, may be, e.g., should be, prevented from reading and/or decoding the trigger frames according to the new trigger frame format.

In some demonstrative aspects, one or more attributes may be defined, for example, to differentiate between trigger frames configured according to different formats, e.g., as described below.

In some demonstrative aspects, non-UHR users, e.g., such as non-HT users, HT users, Very High Throughput (VHT) users, EHT users, and/or any other type of users, may be, e.g., should be, prevented from decoding a trigger frame dedicated to UHR users. For example, this differentiation between UHR users and non-UHR users may be realized, for example, by defining a signaling in Trigger Type subfields of Common Info fields in trigger frames, e.g., as follows:

**Table 1**

| **Trigger Type subfield value** | **Trigger frame variant** |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | UHR-Basic |
| 9 | UHR-Beamforming Report Poll (BFRP) |
| 10 | UHR-MU-BAR |
| 11 | UHR-MU-RTS |
| 12 | UHR-Buffer Status Report Poll (BSRP) |
| 13 | UHR-GCR MU-BAR |
| 14 | UHR-Bandwidth Query Report Poll (BQRP) |
| 15 | UHR-NDP Feedback Report Poll (NFRP) |

For example, as shown in Table 1, in non-UHR trigger frames, the Trigger Type subfield may use only Trigger Type subfield values of 0 to 7, for example, to represent different trigger frame variants, while values 8 to 15 are reserved.

For example, Trigger Type subfield values 8 to 15 may be applied to one or more, e.g., all, trigger frame variants dedicated to UHR users, e.g., as shown in Table 1.

For example, when non-UHR users find that a value in a Trigger Type subfield of a trigger frame is in the range between 8 and 15, the non-UHR users may stop decoding the rest of the trigger frame, for example, as the non-UHR users may not recognize the type of the trigger frame.

For example, when a UHR user reads a value in the range between 0 and 7 in a Trigger Type subfield of a trigger frame, the UHR user may terminate the decoding of the rest of the trigger frame, for example, as the UHR user may know that the trigger frame is sent for non-UHR users.

For example, users triggered by a trigger frame may be, e.g., should be, aware of the total number of triggered users, for example, in order to identify how many user info fields exist in the trigger frame.

In some demonstrative aspects, a user info list configuration may define that all UEM fields are located after the user info fields, and that all user info fields are located before UEM fields, e.g., as described above with reference to Fig. 2.

For example, in case a total number of triggered users is U, then the users may determine that the first *U* fields in the user info list are user info fields.

For example, a user may determine that the user is not triggered in a the current trigger frame, for example, if the user checks all of the *U* user info fields and fails to find the AID12 of the user. According to this example, the user may stop decoding the rest of the trigger frame, for example, if the user determines that the user is not triggered in the current trigger frame.

According to this example, a UEM field may not be decoded by undesired users, which include users that are not triggered and/or triggered users which do not own the LTEM field. For example, only a user, who is the owner of a UEM field, may decode the UEM field. For example, the position of the UEM field may be provided by a user info field of the user, e.g., as described below.

Therefore, the AID12 subfields may not be required to be included in the UEM fields. The ability to exclude the AID subfields from the UEM fields may provide a technical solution for bits saving and low overhead.

In some demonstrative aspects, a number of triggered users of a trigger frame may be provided, for example, by a 7-bit EHT reserved subfield, e.g., bits B56 to B62, of a Common Info field of the trigger frame.

In some demonstrative aspects, number of triggered users of a trigger frame may be provided, for example, by 3 reserved bits, e.g., bits B37 to B39, of a Special User Info field of the trigger frame, for example, if generally the number of triggered users is less than or equal to eight.

In other aspects, the number of triggered users may be provided in any other field or subfield of the trigger frame.

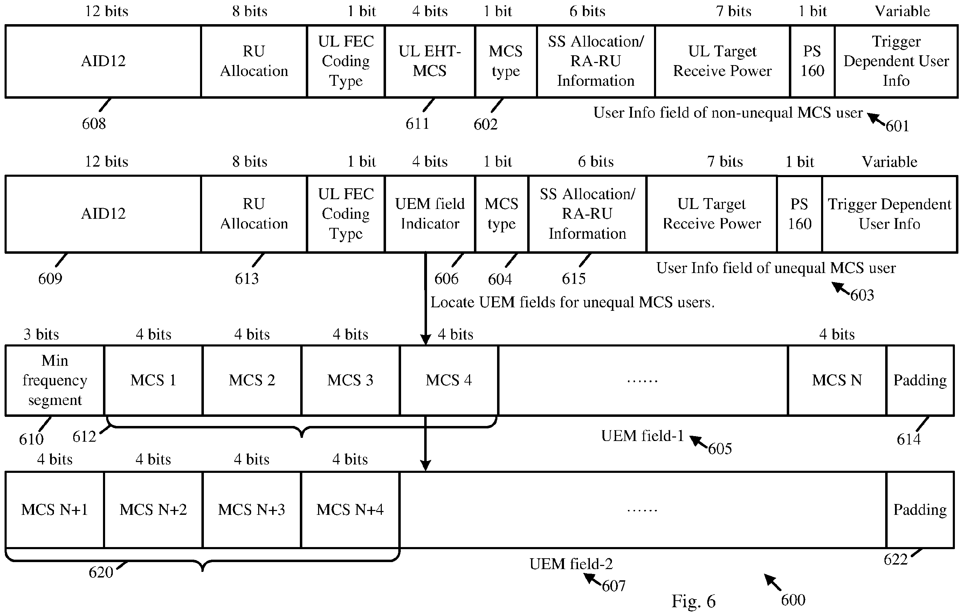

Reference is made to Fig. 6, which schematically illustrates a UEM signaling format 600, in accordance with some demonstrative aspects.

For example, device 102 (Fig. 1) may be configured to generate and/or transmit a trigger frame, which may be configured according to LTEM signaling format 600.

For example, device 140 (Fig. 1) and/or device 160 (Fig. 1) may include, operate as, perform a role of, and/or perform the functionality of one or more users to receive and/or process a trigger frame configured according to UEM signaling format 600.

In some demonstrative aspects, an AP, e.g., an AP implemented by device 102 (Fig. 1), may determine an RU/MRU assignment, including RU/MRU allocation to one or more users.

For example, a user may process a user info field for the user in the trigger frame received from the AP.

In some demonstrative aspects, as shown in Fig. 6, the trigger frame configured according to UEM signaling format 600 may include a user info field 601 for a non-UEM user, a user info field 603 for a UEM user, and one or more UEM fields, e.g., a UEM field 605 (UEM field-1) and/or UEM field 607 (UEM field-2), for the UEM user.

In some demonstrative aspects, a user may find and decode its user info field in the received trigger frame, for example, by user identification (AID12).

In some demonstrative aspects, as shown in Fig. 6, user info field 601 and/or user info field 603 may be configured to include a new subfield, e.g., an MCS type subfield 602 and/or an MCS type subfield 604. For example, it may be defined that the MCS type subfield may exist in user info fields of both unequal MCS users and non-unequal MCS users.

For example, MCS type subfield 602 in user info field 601 may be configured to notify a user that it is a non-UEM user. For example, MCS type subfield 602 may include a 1-bit MCS type subfield, which may be set to a first predefined value, e.g., 0, for example, to indicate that the user of the user info field 601 is a non-UEM user.

For example, MCS type subfield 604 in user info field 603 may be configured to notify a user that it is a UEM user. For example, MCS type subfield 604 may include a 1-bit MCS type subfield, which may be set to a second predefined value, e.g., 1, for example, to indicate that the user of the user info field 603 is a UEM user.

In some demonstrative aspects, the MCS type subfield, e.g., MCS type subfield 602 and/or MCS type subfield 604, may be located at a 26^{th} bit in a user info field. For example, this 26-th bit may be reserved, e.g., according to the EHT variant user info field 300 format (Fig. 3).

In some demonstrative aspects, a definition of a 4-bit subfield prior to the MCS type subfield may be defined, for example, according to the value of the MCS type subfield.

For example, if the value of the MCS type subfield is 0 (non-unequal MCS user), then the 4-bit subfield prior to the MCS type subfield may be used as a UL EHT-MCS subfield, for example, providing the index of a single MCS for the non-UEM user.

For example, as shown in Fig. 6, the 4-bit subfield 611 prior to the MCS type subfield 602 may be set as a UL EHT-MCS subfield 611 to indicate the single MCS index for the non-UEM user.

For example, if the value of the MCS type subfield is 1 (unequal MCS user), then the 4-bit subfield prior to the MCS type subfield may be utilized as a UEM field Indicator subfield to indicate a position of a UEM field for the UEM user, e.g., as described below.

For example, as shown in Fig. 6, the 4-bit subfield 606 prior to the MCS type subfield 604 may be set as a UEM field Indicator subfield 606 to indicate a position of the UEM fields 605 and/or 607 for the UEM user, e.g., as described below.

In some demonstrative aspects, LTEM field Indicator subfield 606 may be configured to inform the UEM user of the position of a first UEM field (UEM field-1), e.g., the UEM field 605, corresponding to the LTEM user, e.g., as described below.

In some demonstrative aspects, UEM field Indicator subfield 606 of user info field 603 may utilize 4 bits to provide a distance from the current User Info field, e.g., user info field 603, to the indicated UEM field-1, e.g., UEM field 605.

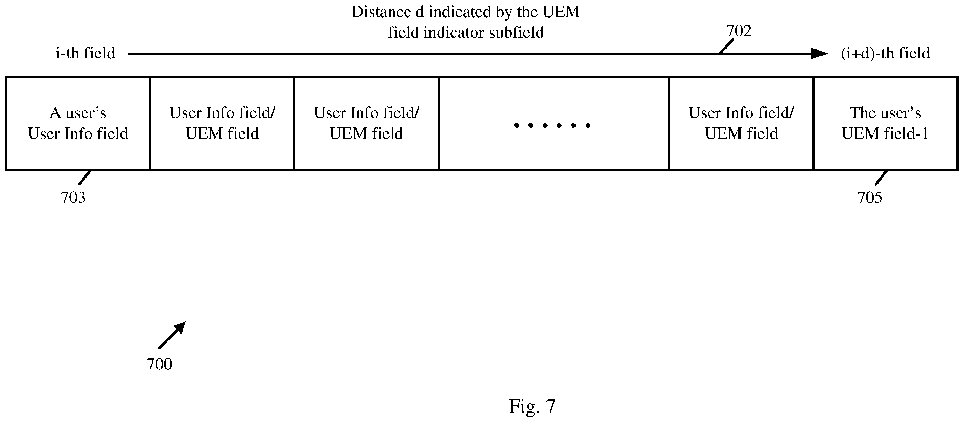

Reference is made to Fig. 7, which schematically illustrates a signaling scheme 700 to signal a UEM field position, in accordance with some demonstrative aspects.

In some demonstrative aspects, UEM field indicator subfield 606 (Fig. 6) in a user info field 703 for a UEM user may be configured to include a value d, which may be configured to indicate a distance 702 between the user info field 703 and a UEM field 705 for the UEM user, e.g., as described below.

In some demonstrative aspects, as shown in Fig. 7, the user info field 703 may be an i-th field in a trigger frame, for example, where a field represents a user info field or a UEM field.

In some demonstrative aspects, as shown in Fig. 7, a value of a 4-bit LTEM field indicator subfield, e.g., a value of UEM field indicator subfield 606 (Fig. 6), may be set to *d,* for example, to indicate that a first UEM field for the LTEM user, e.g., UEM field 705, is d fields (User Info field/LTEM field) away from user info field 703. For example, the UEM field indicator subfield 606 (Fig. 6) in the user field 703 may be configured to indicate that UEM field 705 is at a *(i*+*d)-*th field.

For example, it should be noted that the approach shown in Fig. 7 to indicate a position of UEM fields may depend on a condition that user info fields and UEM fields have the same bit length.

Referring back to Fig. 6, in some demonstrative aspects, one or more UEM fields, e.g., LTEM field 605 and/or UEM field 607, may not require an AID12 for user identification, for example, since a position of the first-in-order UEM field (UEM field-1) may be directly provided by the UEM field Indicator subfield 606 in the user info field 603.

In some demonstrative aspects, as shown in Fig. 6, a format of UEM field 605 may be simplified.

For example, as shown in Fig. 6, a first-in-order UEM field, e.g., UEM field 605, may include, e.g., may only include, a Min Frequency Segment subfield 610 followed by a plurality of MCS subfields 612, and padding bits 614, if needed.

For example, as shown in Fig. 6, a non-first-in-order UEM field, e.g., UEM field 607, may include, e.g., may only include, a plurality of MCS subfields 620, and padding bits 622, e.g., if needed.

For example, one or more non-first-in-order UEM fields, e.g., the UEM field-2, may be, e.g., may always be, located next to their LTEM field-1. Accordingly, it may be sufficient to pinpoint the location of the user's first-in-order UEM field, e.g., UEM field-1, by the user's user info field.

For example, a position of other UEM fields for the user may be automatically identified by the user, for example, after the user's UEM field-1 is located.

For example, a user may calculate a total number of unequal MCSs assigned to the user, for example, after decoding the Min Frequency Segment subfield of the UEM field-1, e.g., Min Frequency Segment subfield 610. According to this example, the user may determine how many additional UEM fields, which are located directly after the UEM field-1, are used to carry all the unequal MCSs assigned to the user.

In some demonstrative aspects, a user may find and decode its user info field in a trigger frame received from an AP. For example, the user may find its user info field based on a user identification (AID12) in an AID12 subfield, e.g., AID12 subfield 608 and/or AID12 subfield 609.

In some demonstrative aspects, the user may determine whether the user is a non-LTEM user or a LTEM user, for example, through the MCS type subfield of the corresponding user info field, e.g., MCS type subfield 602 and/or MCS type subfield 604.

For example, in case of the user is a non-UEM user, the user may obtain its single MCS in the UL EHT-MCS subfield 611, which is prior to MCS type subfield 602.

For example, in case of the user is a UEM user, the user may read position information of its first-in-order UEM field (UEM field-1), for example, through UEM field indicator subfield 606, which is prior to MCS type subfield 604.

In some demonstrative aspects, the user may, e.g., directly, locate and/or decode corresponding first-in-order UEM field (UEM field-1).

For example, the user may calculate a total number of unequal MCSs assigned to the user, for example, based on the user's RU size provided by an RU Allocation subfield 613 of user info field 603, the size of the user's minimum frequency segment with unequal MCSs provided by min frequency segment subfield 609 of the UEM field-1, and/or the number of spatial streams provided by an SS Allocation/RA-RU Information subfield 615 of the user info field 603.

For example, the user may determine how many LTEM fields the user is to obtain and how many UEM fields the user has.

For example, the user may decode all its other UEM fields, which may be located next to the user's UEM field-1, for example, in order to acquire all the unequal MCSs assigned to the user.

In some demonstrative aspects, UEM signaling format 600 may be configured to provide a technical solution to enable a User Info field of a trigger frame to provide, e.g., directly provide, position information of UEM fields to an unequal MCS user, e.g., as described above.

In some demonstrative aspects, new types of subfields in user info fields, e.g., the MCS type subfield and the UEM field Indicator subfield, e.g., MCS type subfield 602, MCS type subfield 604, and/or LTEM field indicator subfield 606, may be defined to indicate MCS types of users and the location of the UEM field-1 carrying unequal MCS information, e.g., as described above.

In some demonstrative aspects, UEM signaling format 600 may be configured to provide a technical solution to support simplifying the format of UEM fields, for example, while supporting the exclusion of the AID12 subfields from the UEM fields. Accordingly, MCS signaling format 600 may be configured to provide a technical solution to save a relatively large amount of bits, thus lowering overhead.

In some demonstrative aspects, UEM signaling format 600 may be configured to provide a technical solution for implementation by future and/or new protocols and/or specifications, e.g., for Wi-Fi 8 (UHR).

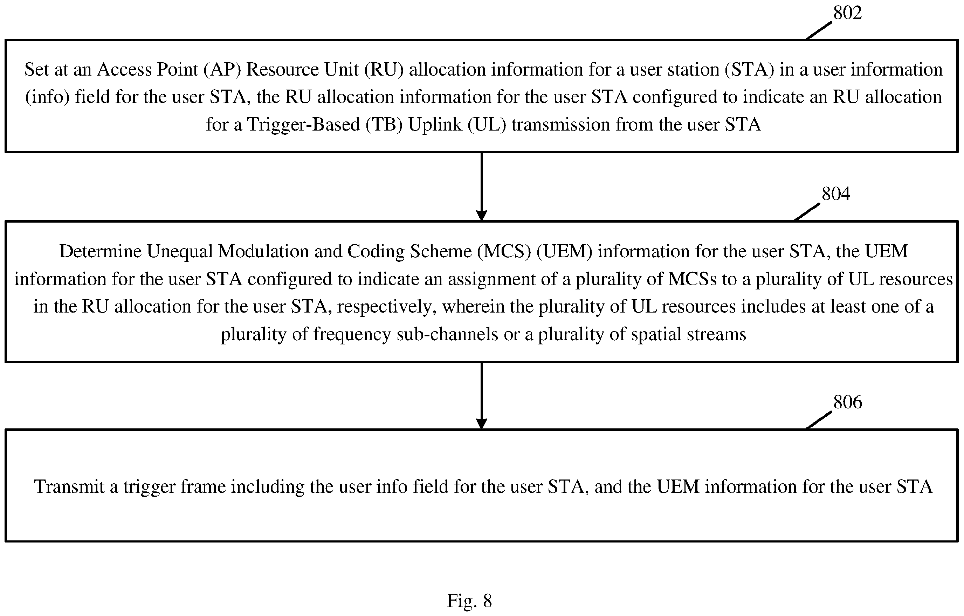

Reference is made to Fig. 8, which schematically illustrates a method of communicating UEM information, in accordance with some demonstrative aspects. For example, one or more of the operations of the method of Fig. 8 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 802, the method may include setting at an AP RU allocation information for a user STA in a user info field for the user STA. For example, the RU allocation information for the user STA may be configured to indicate an RU allocation for a TB UL transmission from the user STA. For example, controller 124 (Fig. 1) may be configured to cause, trigger, and/or control device 102 (Fig. 1) to set RU allocation information for a user STA in a user info field for the user STA, for example, to indicate an RU allocation for a TB LTL transmission from the user STA, e.g., as described above.

As indicated at block 804, the method may include determining UEM information for the user STA. For example, the UEM information for the user STA may be configured to indicate an assignment of a plurality of MCSs to a plurality of UL resources in the RU allocation for the user STA, respectively. For example, the plurality of UL resources may include at least one of a plurality of frequency sub-channels and/or a plurality of spatial streams. For example, controller 124 (Fig. 1) may be configured to cause, trigger, and/or control device 102 (Fig. 1) to determine LTEM information for the user STA, for example, to indicate an assignment of a plurality of MCSs to a plurality of UL resources in the RU allocation for the user STA, respectively, e.g., as described above.

As indicated at block 806, the method may include transmitting a trigger frame including the user info field for the user STA, and the UEM information for the user STA. For example, controller 124 (Fig. 1) may be configured to cause, trigger, and/or control device 102 (Fig. 1) to transmit a trigger frame including the user info field for the user STA, and the UEM information for the user STA, e.g., as described above.

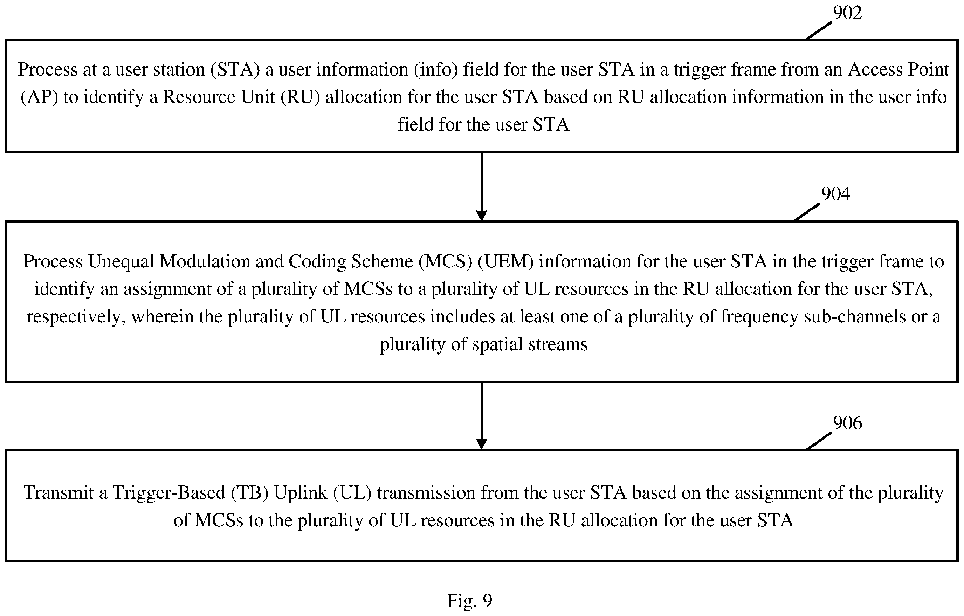

Reference is made to Fig. 9, which schematically illustrates a method of communicating UEM information, in accordance with some demonstrative aspects. For example, one or more of the operations of the method of Fig. 9 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 902, the method may include processing at a user STA a user info field for the user STA in a trigger frame from an AP to identify a RU allocation for the user STA based, for example, on RU allocation information in the user info field for the user STA. For example, controller 154 (Fig. 1) may be configured to cause, trigger, and/or control device 140 (Fig. 1) to process a user info field for device 140 (Fig. 1) in a trigger frame from an AP to identify a RU allocation for device 140 (Fig. 1) based, for example, on RU allocation information in the user info field for device 140 (Fig. 1), e.g., as described above.

As indicated at block 904, the method may include processing UEM information for the user STA in the trigger frame to identify an assignment of a plurality of MCSs to a plurality of UL resources in the RU allocation for the user STA, respectively. For example, the plurality of LTL resources may include at least one of a plurality of frequency sub-channels and/or a plurality of spatial streams. For example, controller 154 (Fig. 1) may be configured to cause, trigger, and/or control device 140 (Fig. 1) to process UEM information for device 140 (Fig. 1) in the trigger frame to identify an assignment of a plurality of MCSs to a plurality of LTL resources in the RU allocation for device 140 (Fig. 1), respectively, e.g., as described above.

As indicated at block 906, the method may include transmitting a TB UL transmission from the user STA based on the assignment of the plurality of MCSs to the plurality of UL resources in the RU allocation for the user STA. For example, controller 154 (Fig. 1) may be configured to cause, trigger, and/or control device 140 (Fig. 1) to transmit a TB UL transmission from device 140 (Fig. 1) based on the assignment of the plurality of MCSs to the plurality of UL resources in the RU allocation for device 140 (Fig. 1), e.g., as described above.

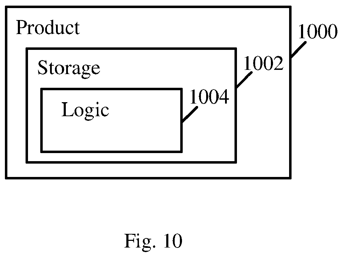

Reference is made to Fig. 10, which schematically illustrates a product of manufacture 1000, in accordance with some demonstrative aspects. Product 1000 may include one or more tangible computer-readable ("machine-readable") non-transitory storage media 1002, which may include computer-executable instructions, e.g., implemented by logic 1004, operable to, when executed by at least one computer processor, enable the at least one computer processor to implement one or more operations at device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2, 3, 4, 5, 6, 7, 8, and/or 9, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1000 and/or machine readable storage media 1002 may include one or more types of computer-readable storage media capable of storing data, including volatile memory, non-volatile memory, removable or non-removable memory, erasable or non-erasable memory, writeable or re-writeable memory, and the like. For example, machine readable storage media 1002 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1004 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1004 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause an Access Point (AP) to set Resource Unit (RU) allocation information for a user station (STA) in a user information (info) field for the user STA, the RU allocation information for the user STA configured to indicate an RU allocation for a Trigger-Based (TB) Uplink (UL) transmission from the user STA; determine Unequal Modulation and Coding Scheme (MCS) (UEM) information for the user STA, the LTEM information for the user STA configured to indicate an assignment of a plurality of MCSs to a plurality of UL resources in the RU allocation for the user STA, respectively, wherein the plurality of LTL resources comprises at least one of a plurality of frequency sub-channels or a plurality of spatial streams; and transmit a trigger frame comprising the user info field for the user STA, and the UEM information for the user STA.

Example 2 includes the subject matter of Example 1, and optionally, wherein the apparatus is configured to cause the AP to set the UEM information for the user STA in at least one UEM field for the user STA, wherein the at least one UEM field for the user STA is after the user info field for the user STA.

Example 3 includes the subject matter of Example 2, and optionally, wherein the apparatus is configured to cause the AP to set a subfield in the user info field for the user STA to indicate that the user STA has a UEM assignment.

Example 4 includes the subject matter of Example 2 or 3, and optionally, wherein the apparatus is configured to cause the AP to set a predefined MCS index in an MCS subfield in the user info field for the user STA, wherein the predefined MCS index is configured to indicate that the user STA has a UEM assignment.

Example 5 includes the subject matter of Example 4, and optionally, wherein the predefined MCS index is 14.

Example 6 includes the subject matter of Example 4 or 5, and optionally, wherein the at least one UEM field for the user STA is configured according to a UEM field format comprising a station (STA) identifier (ID) (STA-ID) field to identify the user STA, and a plurality of MCS subfields after the STA-ID field.

Example 7 includes the subject matter of Example 6, and optionally, wherein a first-in-order UEM field of the at least one UEM field for the user STA comprises a frequency segment subfield configured to indicate a segmentation of the RU allocation for the user STA into the plurality of frequency sub-channels.

Example 8 includes the subject matter of any one of Examples 4-7, and optionally, wherein a bit-length of each UEM field for the user STA is equal to a bit-length of the user info field for the user STA.

Example 9 includes the subject matter of any one of Examples 4-8, and optionally, wherein the at least one UEM field for the user STA is after all user info fields in the trigger frame.

Example 10 includes the subject matter of any one of Examples 4-8, and optionally, wherein the at least one UEM field for the user STA is immediately after the user info field for the user STA.

Example 11 includes the subject matter of Example 10, and optionally, wherein the trigger frame comprises one or more other user info fields after the at least one UEM field for the user STA.

Example 12 includes the subject matter of Example 2 or 3, and optionally, wherein the apparatus is configured to cause the AP to set a predefined MCS type value in an MCS type subfield in the user info field for the user STA, the predefined MCS type value to indicate that the user STA has a UEM assignment.

Example 13 includes the subject matter of Example 12, and optionally, wherein the MCS type subfield comprises a single-bit subfield, wherein the predefined MCS type value comprises a value of one.

Example 14 includes the subject matter of Example 12 or 13, and optionally, wherein the apparatus is configured to cause the AP to set a UEM field indicator subfield in the user info field for the user STA, wherein the UEM field indicator subfield is configured to indicate a position of a first UEM field of the at least one UEM field for the user STA in the trigger frame.

Example 15 includes the subject matter of Example 14, and optionally, wherein the UEM field indicator subfield is configured to indicate a distance between the user info field for the user STA and the first UEM field of the at least one UEM field for the user STA.

Example 16 includes the subject matter of any one of Examples 12-15, and optionally, wherein the at least one UEM field for the user STA is configured according to a UEM field format comprising a plurality of MCS subfields.

Example 17 includes the subject matter of Example 16, and optionally, wherein a first-in-order UEM field of the at least one UEM field for the user STA comprises a frequency segment subfield configured to indicate a segmentation of the RU allocation for the user STA into the plurality of frequency sub-channels.

Example 18 includes the subject matter of any one of Examples 12-17, and optionally, wherein the at least one UEM field for the user STA is after all user info fields in the trigger frame.

Example 19 includes the subject matter of Example 1, and optionally, wherein the apparatus is configured to cause the AP to set the UEM information for the user STA in a plurality of MCS subfields in the user info field for the user STA.

Example 20 includes the subject matter of any one of Examples 1-19, and optionally, wherein the apparatus is configured to cause the AP to set a spatial configuration subfield in the user info field for the user STA to indicate an assignment of the plurality of spatial streams for the user STA, wherein the UEM information for the user STA is configured to indicate an assignment of the plurality of MCSs to the plurality of spatial streams.

Example 21 includes the subject matter of any one of Examples 1-20, and optionally, wherein the apparatus is configured to cause the AP to process an UL Physical layer (PHY) Protocol Data Unit (PPDU) from the user STA according to the assignment of the plurality of MCSs to the plurality of UL resources.

Example 22 includes the subject matter of any one of Examples 1-21, and optionally, wherein the apparatus is configured to cause the AP to determine the assignment of the plurality of MCSs to the plurality of UL resources based on wireless communication conditions over the plurality of UL resources.

Example 23 includes the subject matter of any one of Examples 1-22, and optionally, wherein the apparatus is configured to cause the AP to set an other user info field in the trigger frame, the other user info field comprising other RU allocation information to indicate an other RU allocation for an other user STA, wherein an MCS subfield in the other user info field comprises an MCS index to indicate an MCS to be applied over the entire RU allocation for the other user STA.

Example 24 includes the subject matter of any one of Examples 1-23, and optionally, wherein the plurality of UL resources comprises the plurality of frequency sub-channels in the RU allocation for the user STA.

Example 25 includes the subject matter of any one of Examples 1-24, and optionally, wherein the plurality of UL resources comprises the plurality of spatial streams in the RU allocation for the user STA.

Example 26 includes the subject matter of any one of Examples 1-25, and optionally, wherein the trigger frame comprises an Extremely High Throughput (EHT) trigger frame.

Example 27 includes the subject matter of any one of Examples 1-25, and optionally, wherein the trigger frame comprises an Ultra High Reliability (UHR) trigger frame.

Example 28 includes the subject matter of any one of Examples 1-27, and optionally, comprising at least one radio to transmit the trigger frame.

Example 29 includes the subject matter of Example 28, and optionally, comprising one or more antennas connected to the radio, and a processor to execute instructions of an operating system.

Example 30 includes an apparatus comprising logic and circuitry configured to cause a user station (STA) to process a user information (info) field for the user STA in a trigger frame from an Access Point (AP) to identify a Resource Unit (RU) allocation for the user STA based on RU allocation information in the user info field for the user STA; process Unequal Modulation and Coding Scheme (MCS) (UEM) information for the user STA in the trigger frame to identify an assignment of a plurality of MCSs to a plurality of UL resources in the RU allocation for the user STA, respectively, wherein the plurality of UL resources comprises at least one of a plurality of frequency sub-channels or a plurality of spatial streams; and transmit a Trigger-Based (TB) Uplink (UL) transmission from the user STA based on the assignment of the plurality of MCSs to the plurality of UL resources in the RU allocation for the user STA.

Example 31 includes the subject matter of Example 30, and optionally, wherein the apparatus is configured to cause the user STA to identify the UEM information for the user STA in at least one UEM field for the user STA, wherein the at least one UEM field for the user STA is after the user info field for the user STA.

Example 32 includes the subject matter of Example 31, and optionally, wherein the apparatus is configured to cause the user STA to process a subfield in the user info field for the user STA to identify that the user STA has a UEM assignment.

Example 33 includes the subject matter of Example 31 or 32, and optionally, wherein the apparatus is configured to cause the user STA to identify that the user STA has a UEM assignment based on a predefined MCS index in an MCS subfield in the user info field for the user STA.

Example 34 includes the subject matter of Example 33, and optionally, wherein the predefined MCS index is 14.

Example 35 includes the subject matter of Example 33 or 34, and optionally, wherein the at least one UEM field for the user STA is configured according to a UEM field format comprising a station (STA) identifier (ID) (STA-ID) field to identify the user STA, and a plurality of MCS subfields after the STA-ID field.

Example 36 includes the subject matter of Example 35, and optionally, wherein a first-in-order UEM field of the at least one UEM field for the user STA comprises a frequency segment subfield configured to indicate a segmentation of the RU allocation for the user STA into the plurality of frequency sub-channels.

Example 37 includes the subject matter of any one of Examples 33-36, and optionally, wherein a bit-length of each UEM field for the user STA is equal to a bit-length of the user info field for the user STA.

Example 38 includes the subject matter of any one of Examples 33-37, and optionally, wherein the at least one UEM field for the user STA is after all user info fields in the trigger frame.

Example 39 includes the subject matter of any one of Examples 33-37, and optionally, wherein the at least one UEM field for the user STA is immediately after the user info field for the user STA.

Example 40 includes the subject matter of Example 39, and optionally, wherein the trigger frame comprises one or more other user info fields after the at least one UEM field for the user STA.

Example 41 includes the subject matter of Example 31 or 32, and optionally, wherein the apparatus is configured to cause the user STA to identify that the user STA has a UEM assignment based on a predefined MCS type value in an MCS type subfield in the user info field for the user STA.

Example 42 includes the subject matter of Example 41, and optionally, wherein the MCS type subfield comprises a single-bit subfield, wherein the predefined MCS type value comprises a value of one.

Example 43 includes the subject matter of Example 41 or 42, and optionally, wherein the apparatus is configured to cause the user STA to process a UEM field indicator subfield in the user info field for the user STA to identify a position of a first UEM field of the at least one UEM field for the user STA in the trigger frame.

Example 44 includes the subject matter of Example 43, and optionally, wherein the apparatus is configured to cause the user STA to process the UEM field indicator subfield to identify a distance between the user info field for the user STA and the first UEM field of the at least one UEM field for the user STA.

Example 45 includes the subject matter of any one of Examples 41-44, and optionally, wherein the at least one UEM field for the user STA is configured according to a UEM field format comprising a plurality of MCS subfields.

Example 46 includes the subject matter of Example 45, and optionally, wherein a first-in-order UEM field of the at least one UEM field for the user STA comprises a frequency segment subfield configured to indicate a segmentation of the RU allocation for the user STA into the plurality of frequency sub-channels.

Example 47 includes the subject matter of any one of Examples 41-46, and optionally, wherein the at least one UEM field for the user STA is after all user info fields in the trigger frame.

Example 48 includes the subject matter of Example 30, and optionally, wherein the apparatus is configured to cause the user STA to identify the UEM information for the user STA in a plurality of MCS subfields in the user info field for the user STA.

Example 49 includes the subject matter of any one of Examples 30-48, and optionally, wherein the apparatus is configured to cause the user STA to process a spatial configuration subfield in the user info field for the user STA to identify an assignment of the plurality of spatial streams for the user STA, and to process the UEM information for the user STA to identify an assignment of the plurality of MCSs to the plurality of spatial streams.

Example 50 includes the subject matter of any one of Examples 30-49, and optionally, wherein the plurality of UL resources comprises the plurality of frequency sub-channels in the RU allocation for the user STA.

Example 51 includes the subject matter of any one of Examples 30-50, and optionally, wherein the plurality of UL resources comprises the plurality of spatial streams in the RU allocation for the user STA.

Example 52 includes the subject matter of any one of Examples 30-51, and optionally, wherein the TB LTL transmission comprises an Extremely High Throughput (EHT) transmission.

Example 53 includes the subject matter of any one of Examples 30-51, and optionally, wherein the TB LTL transmission comprises an Ultra High Reliability (UHR) transmission.

Example 54 includes the subject matter of any one of Examples 30-53, and optionally, comprising at least one radio to transmit the TB LTL transmission.

Example 55 includes the subject matter of Example 54, and optionally, comprising one or more antennas connected to the radio, and a processor to execute instructions of an operating system.

Example 56 comprises a wireless communication device comprising the apparatus of any of Examples 1-55.

Example 57 comprises a mobile device comprising the apparatus of any of Examples 1-55.

Example 58 comprises an apparatus comprising means for executing any of the described operations of any of Examples 1-55.

Example 59 comprises a product comprising one or more tangible computer-readable non-transitory storage media comprising instructions operable to, when executed by at least one processor, enable the at least one processor to cause a wireless communication device to perform any of the described operations of any of Examples 1-55.

Example 60 comprises an apparatus comprising: a memory interface; and processing circuitry configured to: perform any of the described operations of any of Examples 1-55.

Example 61 comprises a method comprising any of the described operations of any of Examples 1-55.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at an Access Point (AP), the method comprising:
setting Resource Unit (RU) allocation information for a user station (STA) in a user information (info) field for the user STA, the RU allocation information for the user STA configured to indicate an RU allocation for a Trigger-Based (TB) Uplink (UL) transmission from the user STA;
determining Unequal Modulation and Coding Scheme (MCS) (UEM) information for the user STA, the UEM information for the user STA configured to indicate an assignment of a plurality of MCSs to a plurality of UL resources in the RU allocation for the user STA, respectively, wherein the plurality of UL resources comprises at least one of a plurality of frequency sub-channels or a plurality of spatial streams; and
transmitting a trigger frame comprising the user info field for the user STA, and the UEM information for the user STA.

2. The method of claim 1 comprising setting the UEM information for the user STA in at least one UEM field for the user STA, wherein the at least one UEM field for the user STA is after the user info field for the user STA.

3. The method of claim 2 comprising setting a subfield in the user info field for the user STA to indicate that the user STA has a UEM assignment.

4. The method of claim 2 comprising setting a predefined MCS index in an MCS subfield in the user info field for the user STA, wherein the predefined MCS index is configured to indicate that the user STA has a UEM assignment.

5. The method of any one of claims 2-4, wherein the at least one UEM field for the user STA is configured according to a UEM field format comprising a station (STA) identifier (ID) (STA-ID) field to identify the user STA, and a plurality of MCS subfields after the STA-ID field.

6. The method of claim 5, wherein a first-in-order UEM field of the at least one UEM field for the user STA comprises a frequency segment subfield configured to indicate a segmentation of the RU allocation for the user STA into the plurality of frequency sub-channels.

7. The method of any one of claims 2-6, wherein a bit-length of each UEM field for the user STA is equal to a bit-length of the user info field for the user STA.

8. The method of any one of claims 2-7, wherein the at least one UEM field for the user STA is after all user info fields in the trigger frame.

9. The method of any one of claims 2-7, wherein the at least one UEM field for the user STA is immediately after the user info field for the user STA.

10. The method of claim 2 comprising setting a predefined MCS type value in an MCS type subfield in the user info field for the user STA, the predefined MCS type value to indicate that the user STA has a UEM assignment.

11. The method of claim 10 comprising setting a UEM field indicator subfield in the user info field for the user STA, wherein the UEM field indicator subfield is configured to indicate a position of a first UEM field of the at least one UEM field for the user STA in the trigger frame.

12. The method of any one of claims 1-11 comprising setting a spatial configuration subfield in the user info field for the user STA to indicate an assignment of the plurality of spatial streams for the user STA, wherein the UEM information for the user STA is configured to indicate an assignment of the plurality of MCSs to the plurality of spatial streams.

13. An apparatus comprising a controller configured to cause an Access Point (AP) to perform the method of any one of claims 1-12.

14. The apparatus of claim 13 comprising at least one radio to transmit the trigger frame, one or more antennas connected to the radio, and a processor to execute instructions of an operating system.

15. A product comprising one or more tangible computer-readable non-transitory storage media comprising instructions operable to, when executed by at least one processor, enable the at least one processor to cause an Access Point (AP) to perform the method of any one of claims 1-12.
